# EUROPEAN PATENT SPECIFICATION

(11) **EP 2 265 666 B1**
(45) Date of publication and mention of the grant of the patent: **25.03.2015**
(21) Application number: 09718016.0
(22) Date of filing: 23.02.2009
(51) Int. Cl.: C08K 3/32, C08K 3/38

(54) **SILICONE COMPOSITION, SILICONE ADHESIVE, COATED AND LAMINATED SUBSTRATES**
SILIKONZUSAMMENSETZUNG, SILIKONKLEBER, BESCHICHTETE UND LAMINIERTE SUBSTRATE
COMPOSITION DE SILICONE, ADHÉSIF À BASE DE SILICONE, SUBSTRATS REVÊTUS ET LAMINÉS

(30) Priority: 04.03.2008 US 33441
(43) Date of publication of application: 29.12.2010
(73) Proprietor: Dow Corning Corporation, Midland, Michigan 48686-0994 (US)
(72) Inventor: FAIRBANK, Carl, Midland, Michigan 48640 (US); GREER, Nathan P., Freeland, Michigan 48623 (US); ZHU, Bizhong, Midland, Michigan 48640 (US)
(74) Representative: Gillard, Richard Edward
(86) International application number: PCT/US2009/034812
(87) International publication number: WO 2009/111190

(56) References cited:
- US-A1- 2006 155 039
- US-B1- 6 623 864

## Description

### CROSS-REFERENCE TO RELATED APPLICATIONS

This application claims the benefit of U.S. Provisional Patent Application Serial No. 61/033441, filed on 4 March 2008, under 35 U.S.C. §119(e).

### FIELD OF THE INVENTION

The present invention relates to a silicone composition and more particularly to a filled silicone composition comprising a curable silicone composition comprising at least one silicone resin, and a low-melting inorganic glass filler. The present invention also relates to a silicone adhesive comprising a cured product of at least one silicone resin, and a low-melting inorganic glass filler. The present invention further relates to a coated substrate and to a laminated substrate, each comprising the silicone adhesive.

### BACKGROUND OF THE INVENTION

Silicone adhesives are useful in a variety of applications by virtue of their unique combination of properties, including high thermal stability, good moisture resistance, excellent flexibility, high ionic purity, low alpha particle emissions, and good adhesion to various substrates. For example, silicone adhesives are widely used in the automotive, electronic, construction, appliance, and aerospace industries.

However, when conventional silicone adhesives are exposed to high temperatures, for example temperatures encountered by direct contact with an open flame, the adhesives decompose to form a char, typically a nonadherent powder.

In view of the foregoing, there is a need for a silicone composition that cures to form a silicone adhesive having high char yield, and high adhesion during and after exposure to temperatures above the decomposition temperature of the adhesive.

US 2006/0155039 discloses a fire resistant composition comprising: a silicone polymer; mica in an amount of from 5% to 30% by weight; and a limited amount of glass additive sufficient to enable the formation of a self supporting ceramic material at temperatures above the decomposition temperature of the silicone polymer and below the fire rating temperature of the composition.

US 6,623,864 discloses flame-retardant rubbers prepared by curing a composition comprising liquid dimethylvinyl end blocked polydimethylsiloxane polymers, organopolysiloxane resins, hollow ceramic spheres having a specific particle size, fillers, and a crosslinker in the form of a liquid organohydrogensiloxane in the presence of a catalyst for the crosslinking reaction.

### SUMMARY OF THE INVENTION

The present invention is directed to a filled silicone composition, comprising: a curable silicone composition comprising at least one silicone resin; and
a low-melting inorganic glass filler having a glass transition temperature not greater than 700 °C and a softening point not greater than 800 °C.

The present invention is also directed to a silicone adhesive comprising a cured product of at least one silicone resin, and a low-melting inorganic glass filler having a glass transition temperature not greater than 700 °C and a softening point not greater than 800 °C.

The present invention is further directed to a coated substrate, comprising:
a substrate; and
a silicone adhesive coating on at least a portion of a surface of the substrate, wherein the adhesive coating comprises a cured product of at least one silicone resin, and a low-melting inorganic glass filler having a glass transition temperature not greater than 700 °C and a softening point not greater than 800 °C.

The present invention is still further directed to a laminated substrate, comprising:
a first substrate;
at least one additional substrate overlying the first substrate; and
a silicone adhesive coating on at least a portion of at least one surface of each substrate, provided at least a portion of the adhesive coating is between and in direct contact with opposing surfaces of adjacent substrates, wherein the adhesive coating comprises a cured product of at least one silicone resin, and a low-melting inorganic glass filler having a glass transition temperature not greater than 700 °C and a softening point not greater than 800 °C.

The silicone adhesive of the present invention comprising a cured product of at least one silicone resin, and a low-melting inorganic glass filler has high adhesion during and after exposure to temperatures above the decomposition temperature of the adhesive, low flammability (as evidenced by low heat release rate), and high char yield, compared with the same silicone adhesive absent the low-melting inorganic glass filler. Moreover, when the silicone adhesive contains a low-melting inorganic glass filler having a refractive index comparable to the refractive index of the cured product of at least one silicone resin, the adhesive is transparent.

The silicone adhesive of the present invention is useful in applications requiring adhesives having high adhesion at elevated temperatures, low flammability, and high transparency. For example, the silicone adhesive can be used as a fire-resistant protective coating on flammable substrates. Moreover, the adhesive is useful for bonding glass panels in the fabrication of fire rated windows and glass firewalls.

These and other features, aspects, and advantages of the present invention will become better understood with reference to the following description, appended claims, and accompanying drawings.

### BRIEF DESCRIPTION OF THE DRAWINGS

Figure 1 shows a cross-sectional view of one embodiment of a laminated substrate according to the present invention.
Figure 2 shows a cross-sectional view of the preceding embodiment of the laminated substrate, further comprising a second silicone adhesive coating on the second substrate and a third silicone adhesive coating on the second opposing surface of the first substrate.

### DETAILED DESCRIPTION OF THE INVENTION

A filled silicone composition according to the present invention comprises:
a curable silicone composition comprising at least one silicone resin; and
a low-melting inorganic glass filler having a glass transition temperature not greater than 700 °C and a softening point not greater than 800 °C.

The curable silicone composition can be any curable silicone composition comprising at least one silicone resin. Curable silicone compositions and methods for their preparation are well known in the art. Examples of curable silicone compositions include, but are not limited to, hydrosilylation-curable silicone compositions, condensation-curable silicone compositions, radiation-curable silicone compositions, and peroxide-curable silicone compositions.

The silicone resin of the curable silicone composition can contain T siloxane units, T and Q siloxane units, or T and/or Q siloxane units in combination with M and/or D siloxane units. For example, the silicone resin can be a T resin, a TQ resin, an MT resin, a DT resin, an MDT resin, an MQ resin, a DQ resin, an MDQ resin, an MTQ resin, a DTQ resin, or an MDTQ resin.

The silicone resin typically contains silicon-bonded reactive groups capable of reacting in the presence or absence of a catalyst to form a cured product of the silicone resin. Examples of silicon-bonded reactive groups include, but are not limited to, -H, alkenyl, alkynyl, -OH, a hydrolysable group, alkenyl ether, acryloyloxyalkyl, substituted acryloyloxyalkyl, and an epoxy-substituted organic group.

The silicone resin typically has a weight-average molecular weight (M_{W}) of from 500 to 1,000,000, alternatively from 1,000 to 100,000, alternatively from 1,000 to 50,000, alternatively from 1,000 to 20,000, alternatively form 1,000 to 10,000, where the molecular weight is determined by gel permeation chromatography employing a refractive index detector and polystyrene standards.

A hydrosilylation-curable silicone composition typically comprises a silicone resin having an average of at least two silicon-bonded alkenyl groups or silicon-bonded hydrogen atoms per molecule; an organosilicon compound in an amount sufficient to cure the silicone resin, wherein the organosilicon compound has an average of at least two silicon-bonded hydrogen atoms or silicon-bonded alkenyl groups per molecule capable of reacting with the silicon-bonded alkenyl groups or silicon-bonded hydrogen atoms in the silicone resin; and a catalytic amount of a hydrosilylation catalyst.

According to a first embodiment, the hydrosilylation-curable silicone composition comprises (A) a silicone resin having the formula (R¹R²₂SiO_{1/2})_{w}(R²₂SiO_{2/2})ₓ (R²SiO_{3/2})_{y}(SiO_{4/2})_{z} (I), wherein each R¹ is independently C₁ to C₁₀ hydrocarbyl or C₁ to C₁₀ halogen-substituted hydrocarbyl, both free of aliphatic unsaturation, each R² is independently R¹ or alkenyl, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded alkenyl groups per molecule; (B) an organosilicon compound having an average of at least two silicon-bonded hydrogen atoms per molecule in an amount sufficient to cure the silicone resin; and (C) a catalytic amount of a hydrosilylation catalyst.

Component (A) is at least one silicone resin having the formula (R¹R²₂SiO_{1/2})_{w} (R²₂SiO_{2/2})ₓ(R²SiO_{3/2})_{y}(SiO_{4/2})_{z} (I), wherein each R¹ is independently C₁ to C₁₀ hydrocarbyl or C₁ to C₁₀ halogen-substituted hydrocarbyl, both free of aliphatic unsaturation, each R² is independently R¹ or alkenyl, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded alkenyl groups per molecule.

The hydrocarbyl and halogen-substituted hydrocarbyl groups represented by R¹ are free of aliphatic unsaturation and typically have from 1 to 10 carbon atoms, alternatively from 1 to 6 carbon atoms. Acyclic hydrocarbyl and halogen-substituted hydrocarbyl groups containing at least 3 carbon atoms can have a branched or unbranched structure. Examples of hydrocarbyl groups represented by R¹ include, but are not limited to, alkyl, such as methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, hexyl, heptyl, octyl, nonyl, and decyl; cycloalkyl, such as cyclopentyl, cyclohexyl, and methylcyclohexyl; aryl, such as phenyl and naphthyl; alkaryl, such as tolyl and xylyl; and aralkyl, such as benzyl and phenethyl. Examples of halogen-substituted hydrocarbyl groups represented by R¹ include, but are not limited to, 3,3,3-trifluoropropyl, 3-chloropropyl, chlorophenyl, dichlorophenyl, 2,2,2-trifluoroethyl, 2,2,3,3-tetrafluoropropyl, and 2,2,3,3,4,4,5,5-octafluoropentyl.

The alkenyl groups represented by R², which may be the same or different, typically have from 2 to about 10 carbon atoms, alternatively from 2 to 6 carbon atoms, and are exemplified by, but not limited to, vinyl, allyl, butenyl, hexenyl, and octenyl.

In the formula (I) of the silicone resin, the subscripts w, x, y, and z are mole fractions. The subscript w typically has a value of from 0 to 0.95, alternatively from 0 to 0.8, alternatively from 0 to 0.2; the subscript x typically has a value of from 0 to 0.95, alternatively from 0 to 0.8, alternatively from 0 to 0.5; the subscript y typically has a value of from 0 to 1, alternatively from 0.3 to 1, alternatively from 0.5 to 1; the subscript z typically has a value of from 0 to 0.9, alternatively from 0 to 0.5, alternatively from 0 to 0.1; and the sum y+z typically has value of from 0.1 to 1, alternatively from 0.2 to 1, alternatively from 0.5 to 1, alternatively 0.8 to 1.

Typically at least 50 mol%, alternatively at least 65 mol%, alternatively at least 80 mol% of the groups R² in the silicone resin are alkenyl. The term "mol% of the groups R² in the silicone resin are alkenyl" is defined as the ratio of the number of moles of silicon-bonded alkenyl groups in the silicone resin to the total number of moles of the groups R² in the resin, multiplied by 100.

The silicone resin typically contains less than 10% (w/w), alternatively less than 5% (w/w), alternatively less than 2% (w/w), of silicon-bonded hydroxy groups, as determined by ²⁹Si NMR.

Examples of silicone resins suitable for use as component (A) include, but are not limited to, resins having the following formulae:

(Vi₂MeSiO_{1/2})_{0.25}(PhSiO_{3/2})_{0.75}, (ViMe₂SiO_{1/2})_{0.25}(PhSiO_{3/2})_{0.75},

(ViMe₂SiO_{1/2})_{0.25}(MeSiO_{3/2})_{0.25}(PhSiO_{3/2})_{0.50}, (ViMe₂SiO_{1/2})_{0.15}(PhSiO_{3/2})_{0.75}

(SiO_{4/2})_{0.1}, and (Vi₂MeSiO_{1/2})_{0.15}(ViMe₂SiO_{1/2})_{0.1}(PhSiO_{3/2})_{0.75}, where Me is

methyl, Vi is vinyl, Ph is phenyl, and the numerical subscripts outside the parenthesis denote

mole fractions. Also, in the preceding formulae, the sequence of units is unspecified.

Component (A) can be a single silicone resin or a mixture comprising two or more different silicone resins, each as described above.

Methods of preparing silicone resins containing silicon-bonded alkenyl groups are well known in the art; many of these resins are commercially available. These resins are typically prepared by cohydrolyzing the appropriate mixture of chlorosilane precursors in an organic solvent, such as toluene. For example, a silicone resin consisting essentially of R¹R²₂SiO_{1/2} units and R²SiO_{3/2} units can be prepared by cohydrolyzing a compound having the formula R¹R²₂SiCl and a compound having the formula R²SiCl₃ in toluene, where R¹ and R² are as defined and exemplified above. The aqueous hydrochloric acid and silicone hydrolyzate are separated and the hydrolyzate is washed with water to remove residual acid and heated in the presence of a mild condensation catalyst to "body" the resin to the requisite viscosity. If desired, the resin can be further treated with a condensation catalyst in an organic solvent to reduce the content of silicon-bonded hydroxy groups. Alternatively, silanes containing hydrolysable groups other than chloro, such -Br, -I, -OCH₃, -OC(O)CH₃, -N(CH₃)₂, NHCOCH₃, and -SCH₃, can be utilized as starting materials in the cohydrolysis reaction. The properties of the resin products depend on the types of silanes, the mole ratio of silanes, the degree of condensation, and the processing conditions.

Component (B) is at least one organosilicon compound having an average of at least two silicon-bonded hydrogen atoms per molecule in an amount sufficient to cure the silicone resin of component (A).

The organosilicon compound has an average of at least two silicon-bonded hydrogen atoms per molecule, alternatively at least three silicon-bonded hydrogen atoms per molecule. It is generally understood that cross-linking occurs when the sum of the average number of alkenyl groups per molecule in component (A) and the average number of silicon-bonded hydrogen atoms per molecule in component (B) is greater than four.

The organosilicon compound can be an organohydrogensilane or an organohydrogensiloxane. The organohydrogensilane can be a monosilane, disilane, trisilane, or polysilane. Similarly, the organohydrogensiloxane can be a disiloxane, trisiloxane, or polysiloxane. The structure of the organosilicon compound can be linear, branched, cyclic, or resinous. Cyclosilanes and cyclosiloxanes typically have from 3 to 12 silicon atoms, alternatively from 3 to 10 silicon atoms, alternatively from 3 to 4 silicon atoms. In acyclic polysilanes and polysiloxanes, the silicon-bonded hydrogen atoms can be located at terminal, pendant, or at both terminal and pendant positions.

Examples of organohydrogensilanes include, but are not limited to, diphenylsilane, 2-chloroethylsilane, bis[(p-dimethylsilyl)phenyl]ether, 1,4-dimethyldisilylethane, 1,3,5-tris(dimethylsilyl)benzene, 1,3,5-trimethyl-1,3,5-trisilane, poly(methylsilylene)phenylene, and poly(methylsilylene)methylene.

The organohydrogensilane can also have the formula HR¹₂Si-R'-SiR¹₂H, wherein R¹ is C₁ to C₁₀ hydrocarbyl or C₁ to C₁₀ halogen-substituted hydrocarbyl, both free of aliphatic unsaturation, and R' is a hydrocarbylene group free of aliphatic unsaturation having a formula selected from: 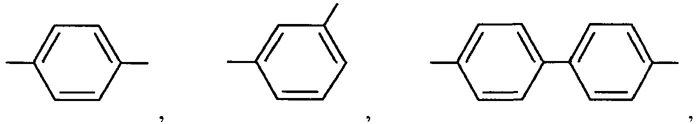 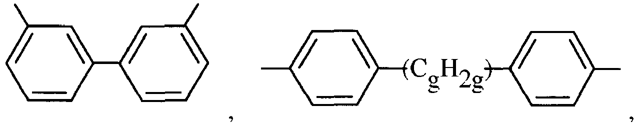 and 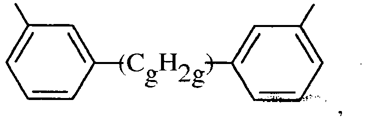 wherein g is from 1 to 6. The hydrocarbyl and halogen-substituted hydrocarbyl groups represented by R¹ are as defined and exemplified above for the silicone resin of component (A).

Examples of organohydrogensilanes having the formula HR¹₂Si-R'-SiR¹₂H, wherein R¹ and R' are as described and exemplified above include, but are not limited to, silanes having the following formulae: 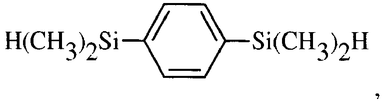 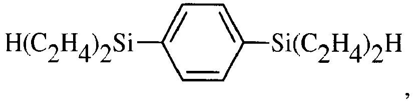 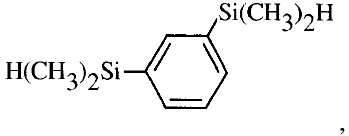 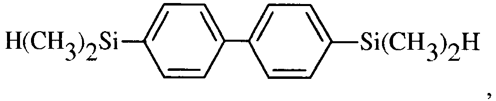 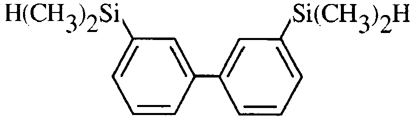 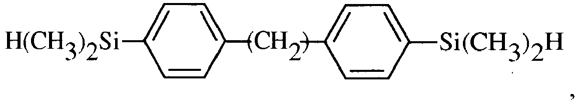 and

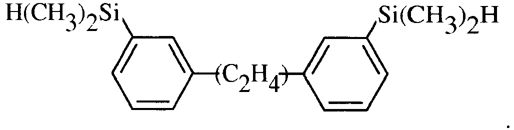

Examples of organohydrogensiloxanes include, but are not limited to, 1,1,3,3-tetramethyldisiloxane, 1,1,3,3-tetraphenyldisiloxane, phenyltris(dimethylsiloxy)silane, 1,3,5-trimethylcyclotrisiloxane, a trimethylsiloxy-terminated poly(methylhydrogensiloxane), a trimethylsiloxy-terminated poly(dimethylsiloxane/methylhydrogensiloxane), a dimethylhydrogensiloxy-terminated poly(methylhydrogensiloxane), and a resin consisting essentially of HMe₂SiO_{1/2} units, Me₃SiO_{1/2} units, and SiO_{4/2} units, wherein Me is methyl.

Component (B) can be a single organosilicon compound or a mixture comprising two or more different organosilicon compounds, each as described above. For example, component (B) can be a single organohydrogensilane, a mixture of two different organohydrogensilanes, a single organohydrogensiloxane, a mixture of two different organohydrogensiloxanes, or a mixture of an organohydrogensilane and an organohydrogensiloxane.

The concentration of component (B) is sufficient to cure (cross-link) the silicone resin of component (A). The exact amount of component (B) depends on the desired extent of cure, which generally increases as the ratio of the number of moles of silicon-bonded hydrogen atoms in component (B) to the number of moles of alkenyl groups in component (A) increases. The concentration of component (B) is typically sufficient to provide from 0.4 to 2 moles of silicon-bonded hydrogen atoms, alternatively from 0.8 to 1.5 moles of silicon-bonded hydrogen atoms, alternatively from 0.9 to 1.1 moles of silicon-bonded hydrogen atoms, per mole of alkenyl groups in component (A).

Methods of preparing organosilicon compounds containing silicon-bonded hydrogen atoms are well known in the art. For example, organohydrogensilanes can be prepared by reaction of Grignard reagents with alkyl or aryl halides. In particular, organohydrogensilanes having the formula HR¹₂Si-R³-SiR¹₂H can be prepared by treating an aryl dihalide having the formula R³X₂ with magnesium in ether to produce the corresponding Grignard reagent and then treating the Grignard reagent with a chlorosilane having the formula HR¹₂SiCl, where R¹ and R³ are as described and exemplified above.

Methods of preparing organohydrogensiloxanes, such as the hydrolysis and condensation of organohalosilanes, are also well known in the art.

Component (C) of the hydrosilylation-curable silicone composition is at least one hydrosilylation catalyst that promotes the addition reaction of component (A) with component (B). The hydrosilylation catalyst can be any of the well-known hydrosilylation catalysts comprising a platinum group metal, a compound containing a platinum group metal, or a microencapsulated platinum group metal-containing catalyst. Platinum group metals include platinum, rhodium, ruthenium, palladium, osmium and iridium. Preferably, the platinum group metal is platinum, based on its high activity in hydrosilylation reactions.

Preferred hydrosilylation catalysts include the complexes of chloroplatinic acid and certain vinyl-containing organosiloxanes disclosed by Willing in U.S. Pat. No. 3,419,593, which is hereby incorporated by reference. A preferred catalyst of this type is the reaction product of chloroplatinic acid and 1,3-diethenyl-1,1,3,3-tetramethyldisiloxane.

The hydrosilylation catalyst can also be a microencapsulated platinum group metal-containing catalyst comprising a platinum group metal encapsulated in a thermoplastic resin. Compositions containing microencapsulated hydrosilylation catalysts are stable for extended periods of time, typically several months or longer, under ambient conditions, yet cure relatively rapidly at temperatures above the melting or softening point of the thermoplastic resin(s). Microencapsulated hydrosilylation catalysts and methods of preparing them are well known in the art, as exemplified in U.S. Pat. No. 4,766,176 and the references cited therein; and U.S. Pat. No. 5,017,654.

Component (C) can be a single hydrosilylation catalyst or a mixture comprising two or more different catalysts that differ in at least one property, such as structure, form, platinum group metal, complexing ligand, and thermoplastic resin.

The concentration of component (C) is sufficient to catalyze the addition reaction of component (A) with component (B). Typically, the concentration of component (C) is sufficient to provide from 0.1 to 1000 ppm of a platinum group metal, preferably from 1 to 500 ppm of a platinum group metal, and more preferably from 5 to 150 ppm of a platinum group metal, based on the combined weight of components (A) and (B). The rate of cure is very slow below 0.1 ppm of platinum group metal. The use of more than 1000 ppm of platinum group metal results in no appreciable increase in cure rate, and is therefore uneconomical.

According to a second embodiment, the hydrosilylation-curable silicone composition comprises (A') a silicone resin having the formula (R¹R³₂SiO_{1/2})_{w} (R³₂SiO_{2/2})ₓ(R³SiO_{3/2})_{y}(SiO_{4/2})_{z} (II), wherein each R¹ is independently C₁ to C₁₀ hydrocarbyl or C₁ to C₁₀ halogen-substituted hydrocarbyl, both free of aliphatic unsaturation, each R³ is independently R¹ or -H, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded hydrogen atoms per molecule; (B') an organosilicon compound having an average of at least two silicon-bonded alkenyl groups per molecule in an amount sufficient to cure the silicone resin; and (C) a catalytic amount of a hydrosilylation catalyst.

Component (A') is at least one silicone resin having the formula (R¹R³₂SiO_{1/2})_{w} (R³₂SiO_{2/2})ₓ(R³SiO_{3/2})_{y}(SiO_{4/2})_{z} (II), wherein each R¹ is independently C₁ to C₁₀ hydrocarbyl or C₁ to C₁₀ halogen-substituted hydrocarbyl, both free of aliphatic unsaturation, each R³ is independently R¹ or -H, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded hydrogen atoms per molecule. In the formula (II), R¹, w, x, y, z, and y+z are as described and exemplified above for the silicone resin having the formula (I).

Typically at least 50 mol%, alternatively at least 65 mol%, alternatively at least 80 mol% of the groups R³ in the silicone resin are hydrogen. The term "mol% of the groups R³ in the silicone resin are hydrogen" is defined as the ratio of the number of moles of silicon-bonded hydrogen atoms in the silicone resin to the total number of moles of the groups R³ in the resin, multiplied by 100.

The silicone resin typically contains less than 10% (w/w), alternatively less than 5% (w/w), alternatively less than 2% (w/w), of silicon-bonded hydroxy groups, as determined by ²⁹Si NMR.

Examples of silicone resins suitable for use as component (A') include, but are not limited to, resins having the following formulae:

(HMe₂SiO_{1/2})_{0.25}(PhSiO_{3/2})_{0.75}, (HMeSiO_{2/2})_{0.3}(PhSiO_{3/2})_{0.6}(MeSiO_{3/2})_{0.1},

and

(Me₃SiO_{1/2})_{0.1}(H₂SiO_{2/2})_{0.1}(MeSiO_{3/2})_{0.4}(PhSiO_{3/2})_{0.4},

where Me is methyl, Ph is phenyl, and the numerical subscripts outside the parenthesis denote mole fractions. Also, in the preceding formulae, the sequence of units is unspecified.

Component (A') can be a single silicone resin or a mixture comprising two or more different silicone resins, each as described above.

Methods of preparing silicone resins containing silicon-bonded hydrogen atoms are well known in the art; many of these resins are commercially available. Silicone resins are typically prepared by cohydrolyzing the appropriate mixture of chlorosilane precursors in an organic solvent, such as toluene. For example, a silicone resin consisting essentially of R¹R³₂SiO_{1/2} units and R³SiO_{3/2} units can be prepared by cohydrolyzing a compound having the formula R¹R³₂SiCl and a compound having the formula R³SiCl₃ in toluene, where R¹ and R³ are as described and exemplified above. The aqueous hydrochloric acid and silicone hydrolyzate are separated and the hydrolyzate is washed with water to remove residual acid and heated in the presence of a mild non-basic condensation catalyst to "body" the resin to the requisite viscosity. If desired, the resin can be further treated with a non-basic condensation catalyst in an organic solvent to reduce the content of silicon-bonded hydroxy groups. Alternatively, silanes containing hydrolysable groups other than chloro, such -Br, -I, -OCH₃, -OC(O)CH₃, -N(CH₃)₂, NHCOCH₃, and -SCH₃, can be utilized as starting materials in the cohydrolysis reaction. The properties of the resin products depend on the types of silanes, the mole ratio of silanes, the degree of condensation, and the processing conditions.

Component (B') is at least one organosilicon compound having an average of at least two silicon-bonded alkenyl groups per molecule in an amount sufficient to cure the silicone resin of component (A').

The organosilicon compound contains an average of at least two silicon-bonded alkenyl groups per molecule, alternatively at least three silicon-bonded alkenyl groups per molecule. It is generally understood that cross-linking occurs when the sum of the average number of silicon-bonded hydrogen atoms per molecule in component (A') and the average number of silicon-bonded alkenyl groups per molecule in component (B') is greater than four.

The organosilicon compound can be an organosilane or an organosiloxane. The organosilane can be a monosilane, disilane, trisilane, or polysilane. Similarly, the organosiloxane can be a disiloxane, trisiloxane, or polysiloxane. The structure of the organosilicon compound can be linear, branched, cyclic, or resinous. Cyclosilanes and cyclosiloxanes typically have from 3 to 12 silicon atoms, alternatively from 3 to 10 silicon atoms, alternatively from 3 to 5 silicon atoms. In acyclic polysilanes and polysiloxanes, the silicon-bonded alkenyl groups can be located at terminal, pendant, or at both terminal and pendant positions.

Examples of organosilanes suitable for use as component (B') include, but are not limited to, silanes having the following formulae:

Vi₄Si, PhSiVi₃, MeSiVi₃, PhMeSiVi₂, Ph₂SiVi₂, and PhSi(CH₂CH=CH₂)₃,

where Me is methyl, Ph is phenyl, and Vi is vinyl.

Examples of organosiloxanes suitable for use as component (B') include, but are not limited to, siloxanes having the following formulae:

PhSi(OSiMe₂Vi)₃, Si(OSiMe₂Vi)₄, MeSi(OSiMe₂Vi)₃, and Ph₂Si(OSiMe₂Vi)₂,

where Me is methyl, Ph is phenyl, and Vi is vinyl.

Component (B') can be a single organosilicon compound or a mixture comprising two or more different organosilicon compounds, each as described above. For example component (B') can be a single organosilane, a mixture of two different organosilanes, a single organosiloxane, a mixture of two different organosiloxanes, or a mixture of an organosilane and an organosiloxane.

The concentration of component (B') is sufficient to cure (cross-link) the silicone resin of component (A'). The exact amount of component (B') depends on the desired extent of cure, which generally increases as the ratio of the number of moles of silicon-bonded alkenyl groups in component (B') to the number of moles of silicon-bonded hydrogen atoms in component (A') increases. The concentration of component (B') is typically sufficient to provide from 0.4 to 2 moles of silicon-bonded alkenyl groups, alternatively from 0.8 to 1.5 moles of silicon-bonded alkenyl groups, alternatively from 0.9 to 1.1 moles of silicon-bonded alkenyl groups, per mole of silicon-bonded hydrogen atoms in component (A').

Methods of preparing organosilanes and organosiloxanes containing silicon-bonded alkenyl groups are well known in the art; many of these compounds are commercially available.

Component (C) of the second embodiment of the hydrosilylation-curable silicone composition is as described and exemplified above for component (C) of the first embodiment.

The hydrosilylation-curable silicone composition of the present method can comprise additional ingredients, provided the ingredient does not prevent the silicone resin of the filled silicone composition from curing to form the silicone adhesive, described below, of the instant invention. Examples of additional ingredients include, but are not limited to, hydrosilylation catalyst inhibitors, such as 3-methyl-3-penten-1-yne, 3,5-dimethyl-3-hexen-1-yne, 3,5-dimethyl-1-hexyn-3-ol, 1-ethynyl-1-cyclohexanol, 2-phenyl-3-butyn-2-ol, vinylcyclosiloxanes, and triphenylphosphine; adhesion promoters, such as the adhesion promoters taught in U.S. Patent Nos. 4,087,585 and 5,194,649; dyes; pigments; anti-oxidants; heat stabilizers; UV stabilizers; flame retardants; flow control additives; and diluents, such as organic solvents and reactive diluents.

The hydrosilylation-curable silicone composition can contain (D) a reactive diluent comprising (i) an organosiloxane having an average of at least two silicon-bonded alkenyl groups per molecule and a viscosity of from 0.001 to 2 Pa·s at 25 °C, wherein the viscosity of (D)(i) is not greater than 20% of the viscosity of the silicone resin, e.g., component (A) or (A'), above, of the silicone composition and the organosiloxane has the formula (R¹R²₂SiO_{1/2})ₘ(R²₂SiO_{2/2})ₙ(R¹SiO_{3/2})ₚ(SiO_{4/2})_{q}, wherein R¹ is C₁ to C₁₀ hydrocarbyl or C₁ to C₁₀ halogen-substituted hydrocarbyl, both free of aliphatic unsaturation, R² is R¹ or alkenyl, m is 0 to 0.8, n = 0 to 1, p = 0 to 0.25, q = 0 to 0.2, m+n+p+q=1, and m+n is not equal to 0, provided when p+q=0, n is not equal to 0 and the alkenyl groups are not all terminal, and (ii) an organohydrogensiloxane having an average of at least two silicon-bonded hydrogen atoms per molecule and a viscosity of from 0.001 to 2 Pa·s at 25 °C, in an amount sufficient to provide from 0.5 to 3 moles of silicon-bonded hydrogen atoms in (D)(ii) per mole of alkenyl groups in (D)(i), wherein the organohydrogensiloxane has the formula (HR¹₂SiO_{1/2})ₛ(R¹SiO_{3/2})ₜ(SiO_{4/2})ᵥ, wherein R¹ is C₁ to C₁₀ hydrocarbyl or C₁ to C₁₀ halogen-substituted hydrocarbyl, both free of aliphatic unsaturation, s is from 0.25 to 0.8, t is from 0 to 0.5, v is from 0 to 0.3, s+t+v=1, and t+v is not equal to 0.

Component (D)(i) is at least one organosiloxane having an average of at least two alkenyl groups per molecule and a viscosity of from 0.001 to 2 Pa·s at 25 °C, wherein the viscosity of (D)(i) is not greater than 20% of the viscosity of the silicone resin of the silicone composition and the organosiloxane has the formula (R¹R²₂SiO_{1/2})ₘ(R²₂SiO_{2/2})ₙ (R¹SiO_{3/2})ₚ(SiO_{4/2})_{q}, wherein R¹ is C₁ to C₁₀ hydrocarbyl or C₁ to C₁₀ halogen-substituted hydrocarbyl, both free of aliphatic unsaturation, R² is R¹ or alkenyl, m is 0 to 0.8, n = 0 to 1, p = 0 to 0.25, q = 0 to 0.2, m+n+p+q=1, and m+n is not equal to 0, provided when p+q=0, n is not equal to 0 and the alkenyl groups are not all terminal (i.e., not all the alkenyl groups in the organosiloxane are in the R¹R²₂SiO_{1/2} units). Further, organosiloxane (D)(i) can have a linear, branched, or cyclic structure. For example, when the subscipts m, p, and q in the formula of organosiloxane (D)(i) are each equal to 0, the organosiloxane is an organocyclosiloxane.

The viscosity of organosiloxane (D)(i) at 25 °C is typically from 0.001 to 2 Pa·s, alternatively from 0.001 to 0.1 Pa·s, alternatively from 0.001 to 0.05 Pa-s. Further, the viscosity of organosiloxane (D)(i) at 25 °C is typically not greater than 20%, alternatively not greater than 10%, alternatively not greater than 1%, of the viscosity of the silicone resin in the hydrosilylation-curable silicone composition.

Examples of organosiloxanes suitable for use as organosiloxane (D)(i) include, but are not limited to, organosiloxanes having the following formulae:

(ViMeSiO)₃, (ViMeSiO)₄, (ViMeSiO)₅, (ViMeSiO)₆, (ViPhSiO)₃, (ViPhSiO)₄,

(ViPhSiO)₅, (ViPhSiO)₆, ViMe₂SiO(ViMeSiO)ₙSiMe₂Vi, Me₃SiO(ViMeSiO)ₙSiMe₃,

and (ViMe₂SiO)₄Si, where Me is methyl, Ph is phenyl, Vi is vinyl, and the subscript n has a value such that the organosiloxane has a viscosity of from 0.001 to 2 Pa·s at 25 °C.

Component (D)(i) can be a single organosiloxane or a mixture comprising two or more different organosiloxanes, each as described above. Methods of making alkenyl-functional organosiloxanes are well known in the art.

Component (D)(ii) is at least one organohydrogensiloxane having an average of at least two silicon-bonded hydrogen atoms per molecule and a viscosity of from 0.001 to 2 Pa-s at 25 °C, in an amount sufficient to provide from 0.5 to 3 moles of silicon-bonded hydrogen atoms in (D)(ii) to moles of alkenyl groups in (D)(i), wherein the organohydrogensiloxane has the formula (HR¹₂SiO_{1/2})ₛ(R¹SiO_{3/2})ₜ(SiO_{4/2})ᵥ, wherein R¹ is C₁ to C₁₀ hydrocarbyl or C₁ to C₁₀ halogen-substituted hydrocarbyl, both free of aliphatic unsaturation, s is from 0.25 to 0.8, t is from 0 to 0.5, v is from 0 to 0.3, s+t+v=1, and t+v is not equal to 0.

The viscosity of organohydrogensiloxane (D)(ii) at 25 °C is typically from 0.001 to 2 Pa·s, alternatively from 0.001 to 0.1 Pa·s, alternatively from 0.001 to 0.05 Pa·s.

Examples of organohydrogensiloxanes suitable for use as organohydrogensiloxane (D)(ii) include, but are not limited to, organohydrogensiloxanes having the following formulae:

PhSi(OSiMe₂H)₃, Si(OSiMe₂H)₄, MeSi(OSiMe₂H)₃, (HMe₂SiO)₃SiOSi(OSiMe₂H)₃,

and

(HMe₂SiO)₃SiOSi(Ph)(OSiMe₂H)₂,

where Me is methyl and Ph is phenyl.

Component (D)(ii) can be a single organohydrogensiloxane or a mixture comprising two or more different organohydrogensiloxanes, each as described above. Methods of making organohydrogensiloxanes are well known in the art.

The ratio of the number of moles of silicon-bonded hydrogen atoms in (D)(ii) to the number of moles of silicon-bonded alkenyl groups in (D)(i) is typically from 0.5 to 3, alternatively from 0.6 to 2, alternatively from 0.9 to 1.5.

The concentration of the reactive diluent (D), component (D)(i) and (D)(ii) combined, in the hydrosilylation-curable silicone composition is typically from 1 to 20% (w/w), alternatively from 1 to 10% (w/w), alternatively from 1 to 5% (w/w), based on the combined weight of the silicone resin, e.g., component (A) or (A'), and the organosilicon compound, e.g., component (B) or (B').

Also, when the silicone composition comprises an organosilicon compound having an average of at least two silicon-bonded hydrogen atoms per molecule, the concentration of the reactive diluent in the hydrosilylation-curable silicone composition is such that the ratio of the sum of the number of moles of silicon-bonded hydrogen atoms in the organosilicon compound and the reactive diluent to the sum of the number of moles of silicon-bonded alkenyl groups in the silicone resin and the reactive diluent is typically from 0.4 to 2, alternatively from 0.8 to 1.5, alternatively from 0.9 to 1.1.

Moreover, when the silicone composition comprises an organosilicon compound having an average of at least two silicon-bonded alkenyl groups per molecule, the concentration of the reactive diluent in the hydrosilylation-curable silicone composition is such that the ratio of the sum of the number of moles of silicon-bonded alkenyl groups in the organosilicon compound and the reactive diluent to the sum of the number of moles of silicon-bonded hydrogen atoms in the silicone resin and the reactive diluent is typically from 0.4 to 2, alternatively from 0.8 to 1.5, alternatively from 0.9 to 1.1.

The condensation-curable silicone composition typically comprises a silicone resin having an average of at least two silicon-bonded hydrogen atoms, hydroxy groups, or hydrolysable groups per molecule and optionally, a cross-linking agent having silicon-bonded hydrolysable groups and/or a condensation catalyst.

According to one embodiment, the condensation-curable silicone composition comprises a silicone resin having the formula (R⁴R⁵₂SiO_{1/2})_{w}(R⁵₂SiO_{2/2})ₓ(R⁵SiO_{3/2})_{y} (SiO_{4/2})_{z} (III), wherein each R⁴ is independently C₁ to C₁₀ hydrocarbyl or C₁ to C₁₀ halogen-substituted hydrocarbyl, each R⁵ is independently R⁴, -H, -OH, or a hydrolysable group, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded hydrogen atoms, hydroxy groups, or hydrolysable groups per molecule. In the formula (III), w, x, y, z, and y+z are as described and exemplified above for the silicone resin having the formula (I).

The hydrocarbyl and halogen-substituted hydrocarbyl groups represented by R⁴ typically have from 1 to 10 carbon atoms, alternatively from 1 to 6 carbon atoms, alternatively from 1 to 4 carbon atoms. Acyclic hydrocarbyl and halogen-substituted hydrocarbyl groups containing at least 3 carbon atoms can have a branched or unbranched structure. Examples of hydrocarbyl groups include, but are not limited to, alkyl, such as methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, hexyl, heptyl, octyl, nonyl, and decyl; cycloalkyl, such as cyclopentyl, cyclohexyl, and methylcyclohexyl; aryl, such as phenyl and naphthyl; alkaryl, such as tolyl and xylyl; aralkyl, such as benzyl and phenethyl; alkenyl, such as vinyl, allyl, and propenyl; arylalkenyl, such as styryl and cinnamyl; and alkynyl, such as ethynyl and propynyl. Examples of halogen-substituted hydrocarbyl groups include, but are not limited to, 3,3,3-trifluoropropyl, 3-chloropropyl, chlorophenyl, dichlorophenyl, 2,2,2-trifluoroethyl, 2,2,3,3-tetrafluoropropyl, and 2,2,3,3,4,4,5,5-octafluoropentyl.

As used herein the term "hydrolysable group" means the silicon-bonded group reacts with water in either the presence or absence of a catalyst at any temperature from room temperature (∼23 ± 2 °C) to 100 °C within several minutes, for example thirty minutes, to form a silanol (Si-OH) group. Examples of hydrolysable groups represented by R⁵ include, but are not limited to, -Cl, -Br, -OR⁶, -OCH₂CH₂OR⁶, CH₃C(=O)O-, Et(Me)C=N-O-, CH₃C(=O)N(CH₃)-, and -ONH₂, wherein R⁶ is C₁ to C₈ hydrocarbyl or C₁ to C₈ halogen-substituted hydrocarbyl.

The hydrocarbyl and halogen-substituted hydrocarbyl groups represented by R⁶ typically have from 1 to 8 carbon atoms, alternatively from 3 to 6 carbon atoms. Acyclic hydrocarbyl and halogen-substituted hydrocarbyl groups containing at least 3 carbon atoms can have a branched or unbranched structure. Examples of hydrocarbyl include, but are not limited to, unbranched and branched alkyl, such as methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, hexyl, heptyl, and octyl; cycloalkyl, such as cyclopentyl, cyclohexyl, and methylcyclohexyl; phenyl; alkaryl, such as tolyl and xylyl; aralkyl, such as benzyl and phenethyl; alkenyl, such as vinyl, allyl, and propenyl; arylalkenyl, such as styryl; and alkynyl, such as ethynyl and propynyl. Examples of halogen-substituted hydrocarbyl groups include, but are not limited to, 3,3,3-trifluoropropyl, 3- chloropropyl, chlorophenyl, and dichlorophenyl.

Typically, at least 10 mol%, alternatively at least 50 mol%, alternatively at least 80 mol% of the groups R⁵ in the silicone resin are hydrogen, hydroxy, or a hydrolysable group. The term "mol% of the groups R⁵ in the silicone resin are in the silicone resin are hydrogen, hydroxy, or a hydrolysable group" is defined as the ratio of the number of moles of silicon-bonded hydrogen, hydroxy, or a hydrolysable groups in the silicone resin to the total number of moles of the groups R⁵ in the resin, multiplied by 100.

Examples of silicone resins having the formula (III) include, but are not limited to, resins having the following formulae:

(MeSiO_{3/2})ₙ, (PhSiO_{3/2})ₙ, (Me₃SiO_{1/2})_{0.8}(SiO_{4/2})_{0.2}, (MeSiO_{3/2})_{0.67}(PhSiO_{3/2})_{0.33},

(MeSiO_{3/2})_{0.45}(PhSiO_{3/2})_{0.40}(Ph₂SiO_{2/2})_{0.1}(PhMeSiO_{2/2})_{0.05},

(PhSiO_{3/2})_{0.4}(MeSiO_{3/2})_{0.45}(PhSiO_{3/2})_{0.1}(PhMeSiO_{2/2})_{0.05},

and

(PhSiO_{3/2})_{0.4}(MeSiO_{3/2})_{0.1}(PhMeSiO_{2/2})_{0.5},

where Me is methyl, Ph is phenyl, the numerical subscripts outside the parenthesis denote mole fractions, and the subscript n has a value such that the silicone resin has a weight-average molecular weight of from 500 to 1,000,000. Also, in the preceding formulae, the sequence of units is unspecified.

The condensation-curable silicone composition can comprise a single silicone resin or a mixture comprising two or more different silicone resins, each as described above.

Methods of preparing silicone resins containing silicon-bonded hydrogen atoms, hydroxy groups, or hydrolysable groups are well known in the art; many of these resins are commercially available. Silicone resins are typically prepared by cohydrolyzing the appropriate mixture of silane precursors in an organic solvent, such as toluene. For example, a silicone resin can be prepared by cohydrolyzing a silane having the formula R⁴R⁵₂SiX and a silane having the formula R⁵SiX₃ in toluene, where R⁴ is C₁ to C₁₀ hydrocarbyl or C₁ to C₁₀ halogen-substituted hydrocarbyl, R⁵ is R⁴, -H, or a hydrolysable group, and X is a hydrolysable group, provided when R⁵ is a hydrolysable group, X is more reactive in the hydrolysis reaction than R⁵. The aqueous hydrochloric acid and silicone hydrolyzate are separated and the hydrolyzate is washed with water to remove residual acid and heated in the presence of a mild condensation catalyst to "body" (i.e., condense) the resin to the requisite viscosity. If desired, the resin can be further treated with a condensation catalyst in an organic solvent to reduce the content of silicon-bonded hydroxy groups.

The condensation-curable silicone composition can comprise additional ingredients, provided the ingredient does not prevent the silicone resin of the filled silicone composition from curing to form the silicone adhesive, described below, of the instant invention. Examples of additional ingredients include, but are not limited to, adhesion promoters; dyes; pigments; anti-oxidants; heat stabilizers; UV stabilizers; flame retardants; flow control additives; organic solvents, cross-linking agents, and condensation catalysts.

For example the condensation-curable silicone composition can further comprises a cross-linking agent and/or a condensation catalyst. The cross-linking agent can have the formula R⁶_{q}SiX_{4-q}, wherein R⁶ is C₁ to C₈ hydrocarbyl or C₁ to C₈ halogen-substituted hydrocarbyl, X is a hydrolysable group, and q is 0 or 1. The hydrocarbyl and halogen-substituted hydrocarbyl groups represented by R⁶ are as described and exemplified above. Also, the hydrolysable groups represented by X are as described and exemplified above for R⁵.

Examples of cross-linking agents include, but are not limited to, alkoxy silanes such as MeSi(OCH₃)₃, CH₃Si(OCH₂CH₃)₃, CH₃Si(OCH₂CH₂CH₃)₃, CH₃Si[O(CH₂)₃CH₃]₃, CH₃CH₂Si(OCH₂CH₃)₃, C₆H₅Si(OCH₃)₃, C₆H₅CH₂Si(OCH₃)₃, C₆H₅Si(OCH₂CH₃)₃, CH₂=CHSi(OCH₃)₃, CH₂=CHCH₂Si(OCH₃)₃, CF₃CH₂CH₂Si(OCH₃)₃, CH₃Si(OCH₂CH₂OCH₃)₃, CF₃CH₂CH₂Si(OCH₂CH₂OCH₃)₃, CH₂=CHSi(OCH₂CH₂OCH₃)₃, CH₂=CHCH₂Si(OCH₂CH₂OCH₃)₃; C₆H₅Si(OCH₂CH₂OCH₃)₃, Si(OCH₃)₄, Si(OC₂H₅)₄, and Si(OC₃H₇)₄; organoacetoxysilanes such as CH₃Si(OCOCH₃)₃, CH₃CH₂Si(OCOCH₃)₃, and CH₂=CHSi(OCOCH₃)₃; organoiminooxysilanes such as CH₃Si[O-N=C(CH₃)CH₂CH₃]₃, Si[O-N=C(CH₃)CH₂CH₃]₄, and CH₂=CHSi[O-N=C(CH₃)CH₂CH₃]₃; organoacetamidosilanes such as CH₃Si[NHC(=O)CH₃]₃ and C₆H₅Si[NHC(=O)CH₃]₃; amino silanes such as CH₃Si[NH(s-C₄H₉)]₃ and CH₃Si(NHC₆H₁₁)₃; and organoaminooxysilanes.

The cross-linking agent can be a single silane or a mixture of two or more different silanes, each as described above. Also, methods of preparing tri- and tetra-functional silanes are well known in the art; many of these silanes are commercially available.

When present, the concentration of the cross-linking agent in the silicone composition is sufficient to cure (cross-link) the silicone resin. The exact amount of the cross-linking agent depends on the desired extent of cure, which generally increases as the ratio of the number of moles of silicon-bonded hydrolysable groups in the cross-linking agent to the number of moles of silicon-bonded hydrogen atoms, hydroxy groups, or hydrolysable groups in the silicone resin increases. Typically, the concentration of the cross-linking agent is sufficient to provide from 0.2 to 4 moles of silicon-bonded hydrolysable groups per mole of silicon-bonded hydrogen atoms, hydroxy groups, or hydrolysable groups in the silicone resin. The optimum amount of the cross-linking agent can be readily determined by routine experimentation.

As stated above, the condensation-curable silicone composition can further comprise at least one condensation catalyst. The condensation catalyst can be any condensation catalyst typically used to promote condensation of silicon-bonded hydroxy (silanol) groups to form Si-O-Si linkages. Examples of condensation catalysts include, but are not limited to, amines; and complexes of lead, tin, zinc, and iron with carboxylic acids. In particular, the condensation catalyst can be selected from tin(II) and tin(IV) compounds such as tin dilaurate, tin dioctoate, and tetrabutyl tin; and titanium compounds such as titanium tetrabutoxide.

When present, the concentration of the condensation catalyst is typically from 0.1 to 10% (w/w), alternatively from 0.5 to 5% (w/w), alternatively from 1 to 3% (w/w), based on the total weight of the silicone resin.

The radiation-curable silicone composition typically comprises a silicone resin having an average of at least two silicon-bonded radiation-sensitive groups per molecule and, optionally, a photoinitiator.

According to one embodiment, the radiation-curable silicone composition comprises a silicone resin having the formula (R⁷R⁸₂SiO_{1/2})_{w}(R⁸₂SiO_{2/2})ₓ(R⁸SiO_{3/2})_{y}(SiO_{4/2})_{z} (IV), wherein each R⁷ is independently C₁ to C₁₀ hydrocarbyl, C₁ to C₁₀ halogen-substituted hydrocarbyl, or -OR⁶, wherein R⁶ is C₁ to C₈ hydrocarbyl or C₁ to C₈ halogen-substituted hydrocarbyl, each R⁸ is independently R¹, -H, or a radiation-sensitive group, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded radiation-sensitive groups per molecule. In the formula (IV), R⁶, w, x, y, z, and y+z are as described and exemplified above. Also, the hydrocarbyl and halogen-substituted hydrocarbyl groups represented by R⁷ are as described and exemplified above for R⁴.

Examples of radiation-sensitive groups represented by R⁸ include, but are not limited to, acryloyloxyalkyl, substituted acryloyloxyalkyl, an alkenyl ether group, alkenyl, and an epoxy-substituted organic group. As used herein, the term "radiation-sensitive group" means the group forms a reactive species, for example a free radical or cation, in the presence of a free radical or cationic photoinitiator when exposed to radiation having a wavelength of from 150 to 800 nm.

Examples of acryloyloxyalkyl groups represented by R⁸ include, but are not limited to, acryloyloxymethyl, 2-acryloyloxyethyl, 3-acryloyloxyypropyl, and 4-acryloyloxybutyl.

Examples of substituted acryloyloxyalkyl groups represented by R⁸ include, but are not limited to, methacryloyloxymethyl, 2-methacryloyloxyethyl, and 3-methacryloyloxylpropyl.

Examples of alkenyl ether groups represented by R⁸ include, but are not limited to, a vinyl ether group having the formula and -O-R⁹-O-CH=CH₂, wherein R⁹ is C₁ to C₁₀ hydrocarbylene or C₁ to C₁₀ halogen-substituted hydrocarbylene.

The hydrocarbylene groups represented by R⁹ typically have from 1 to 10 carbon atoms, alternatively from 1 to 6 carbon atoms, alternatively from 1 to 4 carbon atoms. Examples of hydrocarbylene groups include, but are not limited to, alkylene such as methylene, ethylene, propane-1,3-diyl, 2-methylpropane-1,3-diyl, butane-1,4-diyl, butane-1,3-diyl, pentane-1,5,-diyl, pentane-1,4-diyl, hexane-1,6-diyl, octane-1,8-diyl, and decane-1,10-diyl; cycloalkylene such as cyclohexane-1,4-diyl; arylene such as phenylene. Examples of halogen-substituted hydrocarbylene groups include, but are not limited to, divalent hydrocarbon groups wherein one or more hydrogen atoms have been replaced by halogen, such as fluorine, chlorine, and bromine, such as -CH₂CH₂CF₂CF₂CH₂CH₂-.

Examples of alkenyl groups represented by R⁸ include, but are not limited to, vinyl, allyl, propenyl, butenyl, and hexenyl.

As used herein, the term "epoxy-substituted organic group" refers to a monovalent organic group in which an oxygen atom, the epoxy substituent, is directly attached to two adjacent carbon atoms of a carbon chain or ring system. Examples of epoxy-substituted organic groups represented by R⁸ include, but are not limited to, 2,3-epoxypropyl, 3,4-epoxybutyl, 4,5-epoxypentyl, 2-glycidoxyethyl, 3-glycidoxypropyl, 4-glycidoxybutyl, 2-(3,4-epoxycylohexyl)ethyl, 3-(3,4-epoxycylohexyl)propyl, 2-(3,4-epoxy-3-methylcylohexyl)-2-methylethyl, 2-(2,3-epoxycylopentyl)ethyl, and 3-(2,3 epoxycylopentyl)propyl.

The silicone resin typically contains an average of at least two silicon-bonded radiation-sensitive groups per molecule. Generally, at least 50 mol%, alternatively at least 65 mol%, alternatively at least 80 mol% of the groups R⁸ in the silicone resin are radiation-sensitive groups. The term "mol% of the groups R⁸ in the silicone resin are radiation-sensitive groups" is defined as the ratio of the number of moles of silicon-bonded radiation-sensitive groups in the silicone resin to the total number of moles of the groups R⁸ in the resin, multiplied by 100.

Examples of silicone resins having the formula (IV) include, but are not limited to, resins having the following formulae:

(MeSiO_{3/2})_{0.25}(CH₂=C(CH₃)COO(CH₂)₃SiO_{3/2})_{0.75},

(MeSiO_{3/2})_{0.5}(CH₂=C(CH₃)COO(CH₂)₃SiO_{3/2})_{0.5},

(MeSiO_{3/2})_{0.67}(CH₂=C(CH₃)COO(CH₂)₃SiO_{3/2})_{0.33},

(PhSiO_{3/2})_{0.25}(CH₂=C(CH₃)COO(CH₂)₃SiO_{3/2})_{0.75},

(PhSiO_{3/2})_{0.5}(CH₂=C(CH₃)COO(CH₂)₃SiO_{3/2})_{0.5},

(PbSiO_{3/2})_{0.67}(CH₂=C(CH₃)COO(CH₂)₃SiO_{3/2})_{0.33},

(MeSiO_{3/2})_{0.25}(CH₂=C(CH₃)COO(CH₂)₃SiO_{3/2})_{0.72}(Me₃SiO_{1/2})_{0.03},

(MeSiO_{3/2})_{0.5}(CH₂=C(CH₃)COO(CH₂)₃SiO_{3/2})_{0.47}(Me₃SiO_{1/2})_{0.03},

(MeSiO_{3/2})_{0.67}(CH₂=C(CH₃)COO(CH₂)₃SiO_{3/2})_{0.30}(Me₃SiO_{1/2})_{0.03},

(MeSiO_{3/2})_{0.67}(CH₂=CHCOO(CH₂)₃SiO_{3/2})_{0.33},

(PhSiO_{3/2})_{0.67}(CH₂=CHCOO(CH₂)₃SiO_{3/2})_{0.33},

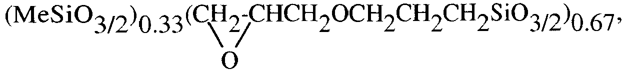

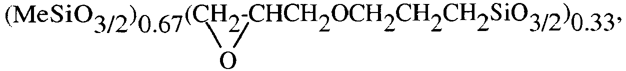

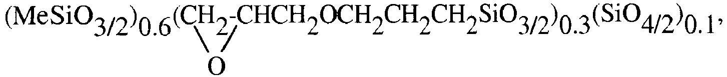

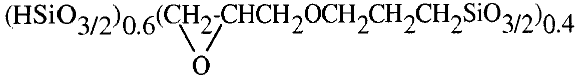

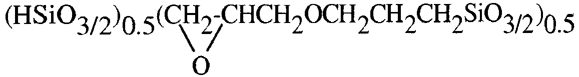

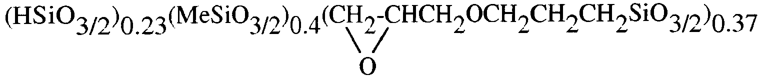

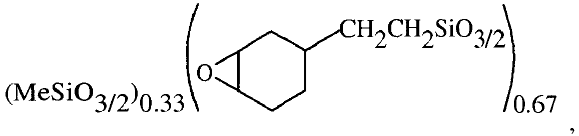

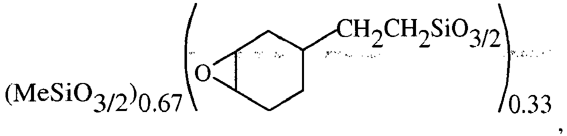

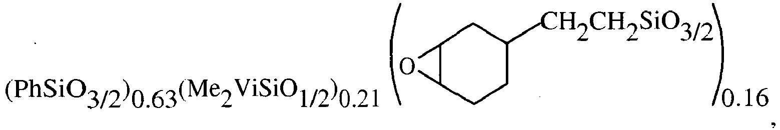

and

(MeSiO_{3/2})_{0.485}(HSiO_{3/2})_{0.485}(ViSiO_{3/2})_{0.3},

where Me is methyl, Ph is phenyl, Vi is vinyl, and the numerical subscripts outside the parenthesis denote mole fractions. Also, in the preceding formulae, the sequence of units is unspecified.

Methods of preparing silicone resins having silicon-bonded radiation-sensitive groups are known in the art. For example, silicone resins containing silicon-bonded acryloyloxyalkyl or substituted acryloyloxyalkyl groups can be prepared by co-hydrolyzing an acryloyloxyalkyl- or substituted-acryloyloxyalkylalkoxysilane and an alkoxysilane in the presence of an acidic or basic catalyst, as exemplified in U.S. Patent No. 5,738,976 and U.S. Patent No. 5,959,038. Alternatively, such resins can be produced by co-hydrolyzing an acryloyloxyalkyl- or substituted-acryloyloxayalkylchlorosilane and at least one chlorosilane, as taught in U.S. Patent No. 4,568,566.

Silicone reins containing silicon-bonded alkenyl ether groups can be prepared by reacting an alkoxysilane with water in the presence of an acidic condensation catalyst and subsequently treating the reaction mixture with a hydroxy-substituted vinyl ether and a transesterification catalyst, as described in U.S. Patent No. 5,861,467. In brief this method comprises the steps of (I) reacting (a) a silane having the formula R_{X}Si(OR¹)₄₋ₓ, (b) water, and (c) an acidic condensation catalyst; (II) removing alcohol from the mixture of step (I), (III) neutralizing the mixture of step (II), (IV) adding a vinyl ether compound having the formula HO-R²-O-CH=CH₂, (V) adding a transesterification catalyst to the mixture of step (IV); and (VI) removing volatiles from the mixture of step (V); wherein R is a monovalent hydrocarbon or halohydrocarbon radical having from 1 to 20 carbon atoms, R¹ is a monovalent alkyl radical having from 1 to 8 carbon atoms, R² is a divalent hydrocarbon or halohydrocarbon radical having from 1 to 20 carbon atoms, and x has a value of from 0 to 3, with the proviso that the molar ratio of water to alkoxy radicals is less than 0.5.

Alternatively, silicone resins containing alkenyl ether groups can be prepared by reacting an alkoxysilane, water, and a hydroxy-substituted vinyl ether compound in the presence of a non-acidic condensation catalyst, and then treating the reaction mixture with a transesterification catalyst, as described in U.S. Patent No. 5,824,761. Briefly, this method comprises (I) reacting (a) a silane having the formula RₓSi(OR¹)₄₋ₓ, (b) water, (c) a non-acidic condensation catalyst selected from amine carboxylates, heavy metal carboxylates, isocyanates, silanolates, phenoxides, mercaptides, CaO, BaO, LiOH, BuLi, amines, and ammonium hydroxides, and (d) a vinyl ether compound having the formula HO-R²-O-CH=CH₂; (II) removing alcohol from the mixture of (I); (III) neutralizing the mixture of (II); (IV) adding a transesterification catalyst to the mixture of (III); and (V) removing volatiles from the mixture of (IV); wherein R is a monovalent hydrocarbon or halohydrocarbon radical having from 1 to 20 carbon atoms, R¹ is a monovalent alkyl radical having from 1 to 8 carbon atoms, R² is a divalent hydrocarbon or halohydrocarbon radical having from 1 to 20 carbon atoms, and x has a value of from 0 to 3, with the proviso that the molar ratio of water to alkoxy radicals is less than 0.5.

Silicone resins containing silicon-bonded alkenyl groups can be prepared as describe above for the silicone resin having the formula (I).

Silicone resins containing silicon-bonded epoxy-substituted organic groups can be prepared by cohydrolyzing an epoxy-functional alkoxysilane and an alkoxysilane in the presence of an organotitanate catalyst, as described in U.S. Patent No. 5,468,826. Alternatively, silicone resins containing silicon-bonded epoxy-substituted organic groups can be prepared by reacting a silicone resin containing silicon-bonded hydrogen atoms with an epoxy-functional alkene in the presence of a hydrosilylation catalyst, as described in U.S. Patent Nos. 6,831,145; 5,310,843; 5,530,075; 5,283,309; 5,468,827; 5,486,588; and 5,358,983.

The radiation-curable silicone composition can comprise additional ingredients, provided the ingredient does not prevent the silicone resin of the filled silicone composition from curing to form the silicone adhesive, described below, of the instant invention. Examples of additional ingredients include, but are not limited to, adhesion promoters; dyes; pigments; anti-oxidants; heat stabilizers; flame retardants; flow control additives; fillers, including extending and reinforcing fillers; organic solvents; cross-linking agents; and photoinitiators.

For example, the radiation-curable silicone composition can further comprise at least one photoinitiator. The photoinitiator can be a cationic or free radical photoinitiator, depending on the nature of the radiation-sensitive groups in the silicone resin. For example, when the resin contains alkenyl ether or epoxy-substituted organic groups, the silicone composition can further comprise at least one cationic photoinitiator. The cationic photoinitiator can be any cationic photoinitiator capable of initiating cure (cross-linking) of the silicone resin upon exposure to radiation having a wavelength of from 150 to 800 nm. Examples of cationic photoinitiators include, but are not limited to, onium salts, diaryliodonium salts of sulfonic acids, triarylsulfonium salts of sulfonic acids, diaryliodonium salts of boronic acids, and triarylsulfonium salts of boronic acids.

Suitable onium salts include salts having a formula selected from R¹⁰₂ I⁺ MX_{z}⁻, R¹⁰₃ S⁺ MX_{z}⁻, R¹⁰₃ Se⁺ MX_{z}⁻, R¹⁰₄ P⁺ MX_{z}⁻, and R¹⁰₄ N⁺ MX_{z}⁻, wherein each R¹⁰ is independently hydrocarbyl or substituted hydrocarbyl having from 1 to 30 carbon atoms; M is an element selected from transition metals, rare earth metals, lanthanide metals, metalloids, phosphorus, and sulfur; X is a halo (e.g., chloro, bromo, iodo), and z has a value such that the product z (charge on X + oxidation number of M) = -1. Examples of substituents on the hydrocarbyl group include, but are not limited to, C₁ to C₈ alkoxy, C₁ to C₁₆ alkyl, nitro, chloro, bromo, cyano, carboxyl, mercapto, and heterocyclic aromatic groups, such as pyridyl, thiophenyl, and pyranyl. Examples of metals represented by M include, but are not limited to, transition metals, such as Fe, Ti, Zr, Sc, V, Cr, and Mn; lanthanide metals, such as Pr, and Nd; other metals, such as Cs, Sb, Sn, Bi, Al, Ga, and In; metalloids, such as B, and As; and P. The formula MX_{z}⁻ represents a non-basic, non-nucleophilic anion. Examples of anions having the formula MX_{z}⁻ include, but are not limited to, BF₄⁻, PF₆⁻, AsF₆⁻, SbF₆⁼, SbCl₆-, and SnCl₆⁻.

Examples of onium salts include, but are not limited to, bis-diaryliodonium salts, such as bis(dodecyl phenyl)iodonium hexafluoroarsenate, bis(dodecylphenyl)iodonium hexafluoroantimonate, and dialkylphenyliodonium hexafluoroantimonate.

Examples of diaryliodonium salts of sulfonic acids include, but are not limited to, diaryliodonium salts of perfluoroalkylsulfonic acids, such as diaryliodonium salts of perfluorobutanesulfonic acid, diaryliodonium salts of perfluoroethanesulfonic acid, diaryliodonium salts of perfluorooctanesulfonic acid, and diaryliodonium salts of trifluoromethanesulfonic acid; and diaryliodonium salts of aryl sulfonic acids, such as diaryliodonium salts of para-toluenesulfonic acid, diaryliodonium salts of dodecylbenzenesulfonic acid, diaryliodonium salts of benzenesulfonic acid, and diaryliodonium salts of 3-nitrobenzenesulfonic acid.

Examples of triarylsulfonium salts of sulfonic acids include, but are not limited to, triarylsulfonium salts of perfluoroalkylsulfonic acids, such as triarylsulfonium salts of perfluorobutanesulfonic acid, triarylsulfonium salts of perfluoroethanesulfonic acid, triarylsulfonium salts of perfluorooctanesulfonic acid, and triarylsulfonium salts of trifluoromethanesulfonic acid; and triarylsulfonium salts of aryl sulfonic acids, such as triarylsulfonium salts of para-toluenesulfonic acid, triarylsulfonium salts of dodecylbenzenesulfonic acid, triarylsulfonium salts of benzenesulfonic acid, and triarylsulfonium salts of 3-nitrobenzenesulfonic acid.

Examples of diaryliodonium salts of boronic acids include, but are not limited to, diaryliodonium salts of perhaloarylboronic acids. Examples of triarylsulfonium salts of boronic acids include, but are not limited to, triarylsulfonium salts of perhaloarylboronic acid. Diaryliodonium salts of boronic acids and triarylsulfonium salts of boronic acids are well known in the art, as exemplified in European Patent Application No. EP 0562922.

The cationic photoinitiator can be a single cationic photoinitiator or a mixture comprising two or more different cationic photoinitiators, each as described above. The concentration of the cationic photoinitiator is typically from 0.01 to 20% (w/w), alternatively from 0.1 to 20% (w/w), alternatively from 0.1 to 5%, based on the weight of the silicone resin.

When the silicone resin contains acryoyloxyalkyl, substituted acryloyloxyalkyl, or alkenyl groups, the silicone composition can further comprise at least one free radical photoinitiator. The free radical photoinitiator can be any free radical photoinitiator capable of initiating cure (cross-linking) of the silicone resin upon exposure to radiation having a wavelength of from 150 to 800 nm.

Examples of free radical photoinitiators include, but are not limited to, benzophenone; 4,4'-bis(dimethylamino)benzophenone; halogenated benzophenones; acetophenone; α-hydroxyacetophenone; chloro acetophenones, such as dichloroacetophenones and trichloroacetophenones; dialkoxyacetophenones, such as 2,2-diethoxyacetophenone; α-hydoxyalkylphenones, such as 2-hydroxy-2-methyl-1-phenyl-1-propanone and 1-hydroxycyclohexyl phenyl ketone; α-aminoalkylphenones, such as 2-methyl-4'-(methylthio)-2-morpholiniopropiophenone; benzoin; benzoin ethers, such as benzoin methyl ether, benzoin ethyl ether, and benzoin isobutyl ether; benzil ketals, such as 2,2-dimethoxy-2-phenylacetophenone; acylphosphinoxides, such as diphenyl(2,4,6-trimethylbenzoyl)phosphine oxide; xanthone derivatives; thioxanthone derivatives; fluorenone derivatives; methyl phehyl glyoxylate; acetonaphthone; anthraquninone derivatives; sufonyl chlorides of aromatic compounds; and *O*-acyl α-oximinoketones, such as 1-phenyl-1,2-propanedione-2-(*O*-ethoxycarbonyl)oxime.

The free radical photoinitiator can also be a polysilane, such as the phenylmethylpolysilanes defined by West in U.S. Pat. No. 4,260,780, which is hereby incorporated by reference; the aminated methylpolysilanes defined by Baney et al. in U.S. Pat. No. 4,314,956, which is hereby incorporated by reference; the methylpolysilanes of Peterson et al. in U.S. Pat. No. 4,276,424, which is hereby incorporated by reference; and the polysilastyrene defined by West et al. in U.S. Pat. No. 4,324,901, which is hereby incorporated by reference.

The free radical photoinitiator can be a single free radical photoinitiator or a mixture comprising two or more different free radical photoinitiators. The concentration of the free radical photoinitiator is typically from 0.1 to 20% (w/w), alternatively from 1 to 10% (w/w), based on the weight of the silicone resin.

The peroxide-curable silicone composition typically comprises a silicone resin having silicon-bonded unsaturated groups and an organic peroxide.

According to one embodiment, the peroxide-curable silicone composition comprises a silicone resin having the formula (R¹R¹¹₂SiO_{1/2})_{w}(R¹¹₂SiO_{2/2})ₓ(R¹¹SiO_{3/2})_{y} (SiO_{4/2})_{z} (V), wherein each R¹ is independently C₁ to C₁₀ hydrocarbyl or C₁ to C₁₀ halogen-substituted hydrocarbyl, both free of aliphatic unsaturation; each R¹¹ is independently R¹, alkenyl, alkynyl, acryloxyalkyl, or substituted acryloxyalkyl; w is from 0 to 0.95, x is from 0 to 0.95, y is from 0 to 1, z is from 0 to 0.9, y+z is from 0.1 to 1, and w+x+y+z=1; and an organic peroxide. In the formula (V), R¹, w, x, y, z, and y+z are as described and exemplified above for the silicone resin having the formula (I).

The alkenyl groups represented by R¹¹, which may be the same or different, typically have from 2 to about 10 carbon atoms, alternatively from 2 to 6 carbon atoms, and are exemplified by, but not limited to, vinyl, allyl, butenyl, hexenyl, and octenyl.

The alkynyl groups represented by R¹¹, which may be the same or different, typically have from 2 to about 10 carbon atoms, alternatively from 2 to 6 carbon atoms, and are exemplified by, but not limited to, ethynyl, propynyl, butynyl, hexynyl, and octynyl.

In one embodiment of the silicone resin, the resin contains an average of at least one alkenyl group or alkynyl group per molecule.

The silicone resin typically contains less than 10% (w/w), alternatively less than 5% (w/w), alternatively less than 2% (w/w), of silicon-bonded hydroxy groups, as determined by 29Si NMR.

Examples of silicone resins having the formula (V) include, but are not limited to, resins having the following formulae:

(Vi₂MeSiO_{1/2})_{0.25}(PhSiO_{3/2})_{0.75}, (ViMe₂SiO_{1/2})_{0.25}(PhSiO_{3/2})_{0.75},

(ViMe₂SiO_{1/2})_{0.25}(MeSiO_{3/2})_{0.25}(PhSiO_{3/2})_{0.50}, (ViMe₂SiO_{1/2})_{0.15}(PhSiO_{3/2})_{0.75}

(SiO_{4/2})_{0.1}, and (Vi₂MeSiO_{1/2})_{0.15}(ViMe₂SiO_{1/2})_{0.1}(PhSiO_{3/2})_{0.75},

where Me is methyl, Vi is vinyl, Ph is phenyl, and the numerical subscripts outside the parenthesis denote mole fractions. Also, in the preceding formulae, the sequence of units is unspecified.

The silicone resin can be a single silicone resin or a mixture comprising two or more different silicone resins, each as described above.

Methods of preparing silicone resins having silicon-bonded alkenyl groups or silicon-bonded alkynyl groups are well known in the art; many of these resins are commercially available. These resins are typically prepared by cohydrolyzing the appropriate mixture of chlorosilane precursors in an organic solvent, such as toluene. For example, a silicone resin consisting essentially of R¹R¹¹₂SiO_{1/2} units and R¹¹SiO_{3/2} units can be prepared by cohydrolyzing a compound having the formula R¹R¹¹₂SiCl and a compound having the formula R¹¹SiCl₃ in toluene, where R¹ and R¹¹ are as defined and exemplified above. The aqueous hydrochloric acid and silicone hydrolyzate are separated and the hydrolyzate is washed with water to remove residual acid and heated in the presence of a mild condensation catalyst to "body" the resin to the requisite viscosity. If desired, the resin can be further treated with a condensation catalyst in an organic solvent to reduce the content of silicon-bonded hydroxy groups. Alternatively, silanes containing hydrolysable groups other than chloro, such -Br, -I, -OCH₃, -OC(O)CH₃, -N(CH₃)₂, -NHCOCH₃, and -SCH₃, can be utilized as starting materials in the cohydrolysis reaction. The properties of the resin products depend on the types of silanes, the mole ratio of silanes, the degree of condensation, and the processing conditions.

Examples of organic peroxides include, diaroyl peroxides such as dibenzoyl peroxide, di-p-chlorobenzoyl peroxide, and bis-2,4-dichlorobenzoyl peroxide; dialkyl peroxides such as di-t-butyl peroxide and 2,5-dimethyl-2,5-di-(t-butylperoxy)hexane; diaralkyl peroxides such as dicumyl peroxide; alkyl aralkyl peroxides such as t-butyl cumyl peroxide and 1,4-bis(t-butylperoxyisopropyl)benzene; and alkyl aroyl peroxides such as t-butyl perbenzoate, t-butyl peracetate, and t-butyl peroctoate.

The organic peroxide can be a single peroxide or a mixture comprising two or more different organic peroxides. The concentration of the organic peroxide is typically from 0.1 to 5% (w/w), alternatively from 0.2 to 2% (w/w), based on the weight of the silicone resin.

The peroxide-curable silicone composition of the present invention can comprise additional ingredients, provided the ingredient does not prevent the silicone resin of the filled silicone composition from curing to form the silicone adhesive, described below, of the instant invention. Examples of additional ingredients include, but are not limited to, silicone rubbers; polyunsaturated compounds; free radical initiators; organic solvents; UV stabilizers; sensitizers; dyes; flame retardants; antioxidants; fillers, such as reinforcing fillers, extending fillers, and conductive fillers; and adhesion promoters.

The low-melting inorganic glass filler of the filled silicone composition can be any inorganic glass filler having a glass transition temperature (T_{g}) not greater than 700 °C and a softening point not greater than 800 °C. The glass filler is an amorphous solid, which may or may not contain silica. The low-melting glass filler is typically an oxide of a metal or metalloid or a mixed oxide comprising at least two different oxides.

The low-melting inorganic glass filler typically has a glass transition temperature of from 150 to 700 °C, alternatively from 250 to 600 °C, alternatively from 350 to 500 °C.

The glass transition temperature of the low-melting inorganic glass filler can be determined using a differential scanning calorimeter according to ASTM Standard E 1356-03. In particular, a glass powder having a mass of 12 mg is sealed in a platinum specimen pan and an empty platinum specimen pan is used as a reference. The purge gas is high purity nitrogen having a flow rate of 100 mL/min. The sample is initially heated at a rate of 10 °C/min. to a temperature 80 °C above the expected glass transition temperature to remove any previous thermal history. The sample is held at this temperature until equilibrium is achieved. The sample is cooled at a rate of 20 °C/min. to a temperature 50 °C below the expected transition temperature. The sample is held at this temperature until equilibrium is achieved. The sample is then heated at a rate of 2 °C/min. and the heating curve is recorded until all desired transitions have been completed. The extrapolated onset temperature is selected to represent the glass transition temperature of the low-melting inorganic glass filler.

The low-melting inorganic glass filler typically has a softening point of from 200 to 800 °C, alternatively from 300 to 650 °C, alternatively from 350 to 500 °C.

The softening point of the low-melting inorganic glass filler can be determined according to ASTM C 338 - 93. A straight, smooth, cylindrical fiber is drawn from a molten sample of the glass filler. A bead is formed on one end of the fiber using a flame. The length of the rod is 235 ± 1 mm, not including the top bead. The average diameter of the fiber is 0.65 ± 0.10 mm and the maximum diameter does not exceed the minimum diameter by more than 0.02 mm over the entire length of the fiber. The fiber is inserted into an electrically heated resistance furnace preheated to 30 °C above the expected softening point of the glass fiber and then cooled to 20 °C below the expected softening point. The furnace is then heated at a rate of 5 ± 1 °C per minute. The fiber length was continuously monitored. When the fiber begins to elongate at the rate of approximately 0.1 mm/min, the length of the fiber is recorded to within 0.02 mm at the end of each minute. The temperature of the furnace is recorded at each half minute point. Fiber length and furnace temperature are recorded until the elongation becomes 1.2 mm or greater in a one minute period. When the elongation exceeded 1.2 mm in a one minute interval, the fiber is removed and the furnace is cooled for a duplicate run. From a plot of the data, the temperature at which the elongation is 1 mm/min. is taken as the softening point of the glass filler.

The low-melting inorganic glass filler typically has a specific surface area of from 1 to 300 m²/g, alternatively from 10 to 100 m²/g, as determined using the Brunauer-Emmett-Teller (B.E.T.) method.

The low-melting inorganic glass filler typically has a median particle size (based on mass) of from 0.001 to 1000 µm, alternatively from 0.01 to 100 µm, alternatively from 0.05 to 50 µm.

Although the shape of the low-melting inorganic glass filler particles is not critical, particles having a spherical shape are preferred because they generally impart a smaller increase in viscosity to the silicone composition than particles having other shapes.

The low-melting inorganic glass filler can be an oxide or mixed oxide containing various metal and/or metalloids. For example, the low-melting inorganic glass filler can be an oxide containing boron, phosphorus, lead, zinc, vanadium, niobium, tantalum, silicon, aluminum, or a mixed oxide comprising two or more of the preceding metals and/or metalloids. Examples of low-melting inorganic glass fillers include, but are not limited to, B₂O₃ (boron oxide), PbO-SiO₂, Bi₂O₃-ZnO, ZnOB₂O₃, B₂O₃-Bi₂O₃, SiO₂-B₂O₃-PbO, SiO₂-B₂O₃-Rb₂O, P₂O₅, ZnO-Bi₂O₃-Al₂O₃-CeO₂-CuO-Fe₂O₃, ZnB₂O₄-NaPO₃, Na₂O-B₂O₃-SiO₂, PbO-ZnO-B₂O₃- SiO₂, PbO-V₂O₅-P₂O₅-ZnO-BaOSrO, and PbO-V₂O₅-Bi₂O₃-ZnO-P₂O₅-Nb₂O₅-Ta₂O₅. According to one embodiment, the low-melting inorganic glass filler is not boron oxide.

The low-melting inorganic glass filler can also be a treated low-melting inorganic glass filler prepared by treating the surfaces of the aforementioned glass fillers with an organosilicon compound. The organosilicon compound can be any of the organosilicon compounds typically used to treat silica fillers. Examples of organosilicon compounds include, but are not limited to, organochlorosilanes such as methyltrichlorosilane, dimethyldichlorosilane, and trimethyl monochlorosilane; organosiloxanes such as hydroxy-endblocked dimethylsiloxane oligomer, hexamethyldisiloxane, and tetramethyldivinyldisiloxane; organosilazanes such as hexamethyldisilazane, hexamethylcyclotrisilazane; and organoalkoxysilanes such as methyltrimethoxysilane, vinyltrimethoxysilane, vinyltriethoxysilane, 3-glycidoxypropyltrimethoxysilane, and 3-methacryloxypropyltrimethoxysilane.

The low-melting inorganic glass filler can be a single low-melting inorganic glass filler or a mixture comprising two or more different low-melting inorganic glass fillers, each as described above.

The concentration of the low-melting inorganic glass filler in the filled silicone composition is typically from 2 to 95% (w/w), alternatively from 20 to 60% (w/w), alternatively from 20 to 40% (w/w), based on the total weight of the filled silicone composition.

The filled silicone composition can further comprise additional ingredients, provided the ingredient does not prevent the silicone resin of the filled silicone composition from curing to form the silicone adhesive, described below, of the instant invention. For example, according to one embodiment the filled silicone composition comprises a silica filler. Examples of silica fillers include, but are not limited to, natural silicas such as crystalline quartz, ground quartz, and diatomaceous silica; synthetic silicas such as fumed silica, fused silica (fused quartz), silica gel, and precipitated silica; and fillers prepared by treating the surfaces of the aforementioned silicas with organosilicon compounds, where the organosilicon compounds are as described and exemplified above for the treated low-melting inorganic glass filler of the filled silicone composition.

The filled silicone composition typically does not contain an organic solvent. However, the composition may further comprise an organic solvent to reduce viscosity of the composition or facilitate application of the composition on a substrate.

The filled silicone composition is typically prepared by combining the components of the curable silicone composition, the low-melting inorganic glass filler, and any optional ingredients in the stated proportions at ambient temperature. Although the order of addition of the various components is not critical if the filled silicone composition is to be used immediately, the catalyst is preferably added last and at a temperature below about 30 °C to prevent premature curing of the composition.

Mixing can be accomplished by any of the techniques known in the art such as milling, blending, and stirring, either in a batch or continuous process. The particular device is determined by the viscosity of the components and the viscosity of the filled silicone composition.

A silicone adhesive according to the present invention comprises a cured product of at least one silicone resin, and a low-melting inorganic glass filler having a glass transition temperature not greater than 700 °C and a softening point not greater than 800 °C.

The silicone adhesive comprises a cured product of at least one silicone resin, where the silicone resin is as described and exemplified above for the filled silicone composition. As used herein, the term "cured product of at least one silicone resin" refers to a cross-linked silicone resin having a three-dimensional network structure.

The silicone adhesive also comprises a low-melting inorganic glass filler, where the filler is as described and exemplified above for the filled silicone composition.

The silicone adhesive typically comprises from 2 to 95% (w/w), alternatively from 20 to 70% (w/w), alternatively from 30 to 60% (w/w), of the low-melting inorganic glass filler, based on the total weight of the adhesive.

The transparency of the silicone adhesive depends on a number of factors, such as the composition of the cured product, the thickness of the adhesive, and the type and concentration of the low-melting inorganic glass filler. As used herein, the term "transparency" refers to the percent transmittance of light in the visible region (∼400 to ∼700 nm) of the electromagnetic spectrum through the adhesive. High transparency is important for certain applications, such as windows.

Generally, the transparency of the silicone adhesive increases as the difference between the refractive index of the low-melting inorganic glass filler and the cured product of at least one silicone resin decreases. For example, a silicone adhesive film having a thickness of 50 µm, wherein the difference between the refractive index of the low-melting inorganic glass filler and the cured product of at least one silicone resin is less than 0.002 typically has a % transmittance of at least 90%.

The silicone adhesive can be prepared by curing the silicone resin of the filled silicone composition, described above. The silicone resin can be cured by exposing the composition to ambient temperature, elevated temperature, moisture, or radiation, depending on the type of curable silicone composition in the filled silicone composition.

When the filled silicone composition comprises a hydrosilylation-curable silicone composition, the silicone resin can be cured by exposing the filled silicone composition to a temperature of from room temperature (∼23 ± 2 °C) to 250 °C, alternatively from room temperature to 200 °C, alternatively from room temperature to 150 °C, at atmospheric pressure. The filled silicone composition is generally heated for a length of time sufficient to cure (cross-link) the silicone resin. For example, the composition is typically heated at a temperature of from 150 to 200 °C for a time of from 0.1 to 3 h.

When the filled silicone composition comprises a condensation-curable silicone composition, the conditions for curing the silicone resin depend on the nature of the silicon-bonded groups in the resin. For example, when the silicone resin contains silicon-bonded hydroxy groups, the silicone resin can be cured (i.e., cross-linked) by heating the filled silicone composition. For example, the silicone resin can typically be cured by heating the composition at a temperature of from 50 to 250 °C, for a period of from 1 to 50 h. When the filled silicone composition comprises a condensation catalyst, the silicone resin can typically be cured at a lower temperature, e.g., from room temperature (∼23 ± 2 °C) to 200 °C.

When the silicone resin contains silicon-bonded hydrogen atoms, the silicone resin can be cured by exposing the filled silicone composition to moisture or oxygen at a temperature of from 100 to 450 °C for a period of from 0.1 to 20 h. When the filled silicone composition contains a condensation catalyst, the silicone resin can typically be cured at a lower temperature, e.g., from room temperature (∼23 ± 2 °C) to 400 °C.

Further, when the filled silicone composition comprises a silicone resin containing silicon-bonded hydrolysable groups, the silicone resin can be cured by exposing the filled silicone composition to moisture at a temperature of from room temperature (∼23 ± 2 °C) to 250 °C, alternatively from 100 to 200 °C, for a period of from 1 to 100 h. For example, the silicone resin can typically be cured by exposing the composition to a relative humidity of 30% at a temperature of from about room temperature (∼23 ± 2 °C) to 150 °C, for a period of from 0.5 to 72 h. Cure can be accelerated by application of heat, exposure to high humidity, and/or addition of a condensation catalyst to the composition.

When the filled silicone composition comprises a radiation-curable silicone composition, the silicone resin can be cured by exposing the filled silicone composition to an electron beam. Typically, the accelerating voltage is from about 0.1 to 100 keV, the vacuum is from about 10 to 10-3 Pa, the electron current is from about 0.0001 to 1 ampere, and the power varies from about 0.1 watt to 1 kilowatt. The dose is typically from about 100 microcoulomb/cm² to 100 coulomb/cm², alternatively from about 1 to 10 coulombs/cm². Depending on the voltage, the time of exposure is typically from about 10 seconds to 1 hour.

Also, when the filled silicone composition further comprises a cationic or free radical photoinitiator, described above, the silicone resin can be cured by exposing the filled silicone composition to radiation having a wavelength of from 150 to 800 nm, alternatively from 200 to 400 nm, at a dosage sufficient to cure (cross-link) the silicone resin. The light source is typically a medium pressure mercury-arc lamp. The dose of radiation is typically from 30 to 1,000 mJ/cm², alternatively from 50 to 500 mJ/cm². Moreover, the filled silicone composition can be externally heated during or after exposure to radiation to enhance the rate and/or extent of cure.

When the filled silicone composition comprises a peroxide-curable silicone composition, the silicone resin can be cured by exposing the filled silicone composition to a temperature of from room temperature (∼23 ± 2 °C) to 180 °C, for a period of from 0.05 to 1 h.

The present invention is further directed to a coated substrate, comprising:
a substrate; and
a silicone adhesive coating on at least a portion of a surface of the substrate, wherein the adhesive coating comprises a cured product of at least one silicone resin, and a low-melting inorganic glass filler having a glass transition temperature not greater than 700 °C and a softening point not greater than 800 °C.

The substrate can be any rigid or flexible material having a planar, complex, or irregular contour. The substrate can be transparent or nontransparent to light in the visible region (∼400 to ∼700 nm) of the electromagnetic spectrum. Also, the substrate can be an electrical conductor, semiconductor, or nonconductor. Examples of substrates include, but are not limited to, semiconductors such as silicon, silicon having a surface layer of silicon dioxide, silicon carbide, indium phosphide, and gallium arsenide; quartz; fused quartz; aluminum oxide; ceramics; glass such as soda-lime glass, borosilicate glass, lead-alkali glass, borate glass, silica glass, aluminosilicate glass, lead-borate glass, sodium borosilicate glass, lithium aluminosilicate glass, Chalcogenide glass, phosphate glass,and alkali-barium silicate glass; metal foils; polyolefins such as polyethylene, polypropylene, polystyrene, polyethylene terephthalate (PET), and polyethylene naphthalate; fluorocarbon polymers such as polytetrafluoroethylene and polyvinylfluoride; polyamides such as Nylon; polyimides; polyesters such as poly(methyl methacrylate); epoxy resins; polyethers; polycarbonates; polysulfones; and polyether sulfones.

In addition, the substrate can be a reinforced silicone resin film prepared by impregnating a fiber reinforcement (e.g., woven or nonwoven glass fabric, or loose glass fibers) in a curable silicone composition comprising a silicone resin, and heating the impregnated fiber reinforcement to cure the silicone resin. Reinforced silicone resin films prepared from various types of curable silicone compositions are known in the art, as exemplified in the following International Patent Application Publications: WO2006/088645, WO2006088646, WO2007/092032, and WO2007/018756.

The coated substrate comprises a silicone adhesive coating on at least a portion of a surface of the substrate. The adhesive coating may be on a portion of one or more surfaces of the substrate or on all of one or more surfaces. For example, when the substrate is a flat panel, the silicone adhesive coating may be on one side, on both sides, or on both sides and the edges, of the substrate.

The silicone adhesive coating comprises a cured product of at least one silicone resin and a low-melting inorganic glass filler, each as described and exemplified above for the silicone adhesive.

The silicone adhesive coating can be a single layer coating comprising one layer of a silicone adhesive, or a multiple layer coating comprising two or more layers of at least two different silicone adhesives, where directly adjacent layers comprise different silicone adhesives (i.e., contain different cured products and/or glass fillers). The multiple layer coating typically comprises from 2 to 7 layers, alternatively from 2 to 5 layers, alternatively from 2 to 3 layers.

The single layer silicone adhesive coating typically has a thickness of from 0.03 to 300 µm, alternatively from 0.1 to 100 µm, alternatively from 0.1 to 50 µm. The multiple layer coating typically has a thickness of from 0.06 to 300 µm, alternatively from 0.2 to 100 µm, alternatively 0.2 to 50 µm. When the thickness of the silicone adhesive coating is less than 0.03 µm, the coating may become discontinuous. When the thickness of the silicone adhesive coating is greater than 300 µm, the coating may exhibit reduced adhesion and/or cracking.

The coated substrate can be prepared by forming a silicone adhesive coating on a substrate, where the coating and the substrate are as defined and exemplified above. For example, a coated substrate comprising a single-layer silicone adhesive coating can be prepared by (i) applying a filled silicone composition comprising a curable silicone composition comprising at least one silicone resin, and a low-melting inorganic glass filler, the filled silicone composition as described above, on a substrate to form a film, and (ii) curing the silicone resin of the film. The filled silicone composition can be applied on the substrate using conventional methods such as spin coating, dip coating, spray coating, flow coating, screen printing, and roll coating. When present, the solvent is typically allowed to evaporate from the coated substrate before the film is heated. Any suitable means for evaporation may be used such as simple air drying, applying a vacuum, or heating (up to 50 °C).

The silicone resin of the film can be cured by exposing the film to ambient temperature, elevated temperature, moisture, or radiation, depending on the type of curable silicone composition in the filled silicone composition. Suitable conditions for curing the silicone resin are as described above in the method of preparing the silicone adhesive of the present invention.

The method of preparing the coated substrate, wherein the coating comprises a single layer adhesive coating can further comprise repeating the steps (i) and (ii) to increase the thickness of the coating, except the filled silicone composition is applied on the cured adhesive film rather than the substrate, and the same filled silicone composition is used for each application.

A coated substrate comprising a multiple layer silicone adhesive coating can be prepared in a manner similar to the method used to prepare a single layer coating, only adjacent layers of the coating are prepared using a filled silicone composition having a different composition and typically each film is at least partially cured before applying the filled silicone composition of the next layer. For example, a coated substrate comprising a silicone adhesive coating having two layers can be prepared by (i) applying a filled silicone composition comprising a curable silicone composition comprising at least one silicone resin, and a low-melting inorganic glass filler, the filled silicone composition as described above, on a substrate to form a first film, (ii) at least partially curing the silicone resin of the first film, (iii) applying a filled silicone composition different from the composition in (i), on the partially cured first film, and (iv) curing the silicone resin of the second film.

A laminated substrate according to the present invention comprises
a first substrate;
at least one additional substrate overlying the first substrate; and
a silicone adhesive coating on at least a portion of at least one surface of each substrate, provided at least a portion of the adhesive coating is between and in direct contact with opposing surfaces of adjacent substrates, wherein the adhesive coating comprises a cured product of at least one silicone resin, and a low-melting inorganic glass filler having a glass transition temperature not greater than 700 °C and a softening point not greater than 800 °C. As used herein, the term "overlying" used in reference to the additional substrates means each additional substrate occupies a position over, but not in direct contact with, the first substrate and any intervening substrate(s).

The substrates and the silicone adhesive coating of the laminated substrate are as described and exemplified above for the coated substrate of the present invention. The laminated substrate comprises a first substrate and at least one additional substrate. The laminated substrate typically contains from 1 to 20 additional substrates, alternatively from 1 to 10 additional substrates, alternatively from 1 to 4 additional substrates. When the laminated substrate is a laminated glass substrate, at least one of the substrates is glass and, optionally, at least one of the substrates is a reinforced silicone resin film, described above.

The laminated substrate comprises a silicone adhesive coating on at least a portion of at least one surface of each substrate. The adhesive coating may be on a portion of one or more surfaces of each substrate or on all of one or more surfaces of each substrate. For example, when the laminated substrate is a laminated glass comprising glass panes, the silicone adhesive coating may be on one side, on both sides, or on both sides and the edges, of each pane.

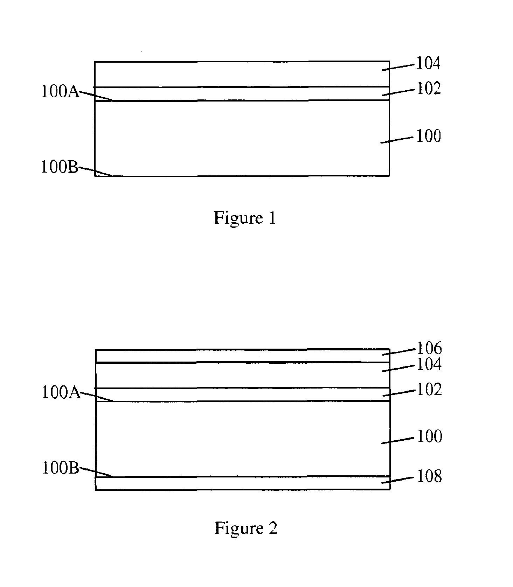

As shown in Figure 1, one embodiment of a laminated substrate according to the present invention comprises a first substrate 100 having a first opposing surface 100A and a second opposing surface **100B;** a first silicone adhesive coating 102 on the first opposing surface 100A of the first substrate 100, wherein the first silicone adhesive coating 102 comprises a cured product of at least one silicone resin, and a low-melting inorganic glass filler having a glass transition temperature not greater than 700 °C and a softening point not greater than 800 °C; and a second substrate 104 on the first silicone adhesive coating 102.

As shown in Figure 2, the preceding embodiment of the laminated substrate can further comprise a second silicone adhesive coating 106 on the second substrate 104 and a third silicone adhesive coating 108 on the second opposing surface 100B of the first substrate 100, wherein the second and third adhesive coatings each comprise a cured product of at least one silicone resin, and a low-melting inorganic glass filler having a glass transition temperature not greater than 700 °C and a softening point not greater than 800 °C.

A suitable method of preparing the laminated substrate is illustrated here for the laminated substrate depicted in Figure 1. The laminated substrate can be prepared by (i) applying a filled silicone composition comprising a curable silicone composition comprising at least one silicone resin, and a low-melting inorganic filler, the filled silicone composition as described above, on a first surface of a substrate to form a first adhesive film; and (ii) applying a second substrate on the first adhesive film; and (iii) curing the silicone resin of the first adhesive film. Laminated substrates comprising additional silicone adhesive coatings and substrates can be prepared in a similar manner. When the laminated substrate comprises at least one multiple layer silicone adhesive coating, typically each layer of the coating is at least partially cured before the next layer is formed.

The silicone adhesive of the present invention comprising a cured product of at least one silicone resin, and a low-melting inorganic glass filler has high adhesion during and after exposure to temperatures above the decomposition temperature of the adhesive, low flammability (as evidenced by low heat release rate), and high char yield, compared to the same silicone adhesive absent the low-melting inorganic glass filler. Moreover, when the silicone adhesive contains a low-melting inorganic glass filler having a refractive index comparable to the refractive index of the cured product of at least one silicone resin, the adhesive is transparent.

The silicone adhesive of the present invention is useful in applications requiring adhesives having high adhesion at elevated temperatures, low flammability, and high transparency. For example, the silicone adhesive can be used as a fire-resistant protective coating on flammable substrates. Moreover, the adhesive is useful for bonding glass panels in the fabrication of fire rated windows and glass firewalls.

### EXAMPLES

The following examples are presented to better illustrate the filled silicone composition and laminated substrate of the present invention, but are not to be considered as limiting the invention, which is delineated in the appended claims. Unless otherwise noted, all parts and percentages reported in the examples are by weight. The following materials were employed in the examples:

Silicone Base A: a mixture containing 82% of a silicone resin having the formula (PhSiO_{3/2})_{0.75}(ViMe₂SiO_{1/2})_{0.25}, where the resin has a weight-average molecular weight of about 1700, a number-average molecular weight of about 1440, and contains about 1 mol% of silicon-bonded hydroxy groups; and 18% of 1,4-bis(dimethylsilyl)benzene. The mole ratio of silicon-bonded hydrogen atoms in the 1,4-bis(dimethylsilyl)benzene to silicon-bonded vinyl groups in the silicone resin is 1.1:1, as determined by ²⁹SiNMR and ¹³CNMR.

Silicone Base B: a mixture containing 76% of a silicone resin having the formula (PhSiO_{3/2})_{0.75}(ViMe₂SiO_{1/2})_{0.25}, where the resin has a weight-average molecular weight of about 1700, a number-average molecular weight of about 1440, and contains about 1 mol% of silicon-bonded hydroxy groups; 9.5% of phenyltris(dimethylsiloxy)silane; and 14.5% of 1,1,5,5-tetramethyl-3,3-diphenyltrisiloxane. The mole ratios of silicon-bonded hydrogen atoms in the phenyltris(dimethylsiloxy)silane to silicon-bonded vinyl groups in the Silicone Resin, and silicon-bonded hydrogen atoms in the 1,1,5,5-tetramethyl-3,3-diphenyltrisiloxane to silicon-bonded vinyl groups are each 0.55:1, as determined by ²⁹SiNMR and ¹³CNMR.

Melinex® 516, sold by Dupont Teijin Films (Hopewell, VA), is a polyethylene-terephthalate (PET) film pretreated on one side with a release agent for slip and having a thickness of 125 µm.

Glass Fabric is a heat-treated glass fabric prepared by heating style 106 electrical glass fabric having a plain weave and a thickness of 37.5 µm at 575 °C for 6 h. The untreated glass fabric was obtained from JPS Glass (Slater, SC).

Platinum Catalyst is a mixture containing a platinum(0) complex of 1,3-divinyl-1,1,3,3,-tetramethyldisiloxane in toluene, and having a platinum concentration of 1000 ppm.

Boron Oxide is a powder prepared by passing boron oxide obtained from Aldrich (Milwaukee, WI) through a No. 45 Sieve (USA Standard Sieve) and discarding the residue.

### Example 1

Silicone Base A was mixed with 0.5% (w/w), based on the weight of the Base, of Platinum Catalyst. The resulting composition was applied on the release agent-treated surface of a Melinex® 516 PET film (8 in. x 11 in.) to form a silicone film. Glass Fabric having the same dimensions as the PET film was carefully laid down on the silicone film, allowing sufficient time for the composition to thoroughly wet the fabric. The aforementioned silicone composition was then uniformly applied to the embedded fabric. An identical PET film was placed on top of the coating with the release agent-treated side in contact with the silicone composition. The stack was then passed between two stainless steel bars separated by a distance of 300 µm. The laminate was heated in an oven at 150 °C for 10 min. The oven was turned off and the laminate was allowed to cool to room temperature inside the oven. The upper PET film was separated (peeled away) from the reinforced silicone resin film, and the silicone resin film was then separated from the lower PET film. The transparent reinforced silicone resin film had a thickness of about 125 µm.

### Example 2

Silicone Base B (100 g), 10 g of fumed silica having a surface area (BET) of 200 ± 25 m²/g, 20 g of Boron Oxide, and 0.5 g of vinyltrimethoxysilane were mixed in a Hauschild mixer. The mixture was then passed five consecutive times through a three-roll mill having a gap of 0.0015 and a speed of 45 rpm. Toluene (65 g) was added to the mixture and the composition was ball-milled with 3-mm steel balls in a paint shaker for 45 min. Toluene was removed from the milled composition under reduced pressure (5 mmHg, 667 Pa) at a temperature of 80 °C using a rotary evaporator. The resulting composition was mixed with 0.1 g of Platinum Catalyst.

### Example 3

Two flat float glass plates (6 in. x 6 in. x 1/8 in.) were washed with a warm solution of detergent in water, thoroughly rinsed with deionized water, and dried in air. Approximately 2 g of the silicone composition of Example 2 was applied on one side of each glass plate. The reinforced silicone resin film of Example 1 having the same dimensions as the glass plates was placed on the coated surface of one of the glass plates, and the coated surface of the other glass plate was then placed on the exposed surface of the reinforced silicone resin film. The laminate was held under vacuum (2500 Pa) at room temperature for 1 h. The composite was heated in an oven at a rate of 3 °C/min. to 150 °C, at which temperature the laminate was maintained for 2 h. The oven was turned off and the laminated glass was allowed to cool to room temperature inside the oven.

A torch supplied with propylene at a pressure of 10 psi (6.9 x 10⁴ Pa) and having an orifice diameter of 2.5 in. was positioned perpendicular to one flat surface of the laminated glass at a distance of 11 in. from the surface. The laminated glass was exposed to the torch for 15 min. and then allowed to cool to room temperature. After heat treatment, the glass plates in the laminate remained bonded to the reinforced silicone resin film.

### Example 4

Silicone Base B (80 g), 6.8 g of 1,3,5,7-tetramethyl-1,3,5,7-tetravinylcyclo-tetrasiloxane, 13.2 g of 1,1,5,5-tetramethyl-3,3-diphenyltrisiloxane, and 50 g of Boron Oxide, were mixed in a Hauschild mixer. The mixture was passed five consecutive times through a three-roll mill having a gap of 0.0015 and a speed of 45 rpm. The mixture was then ball-milled with 3-mm steel balls in a Hauschild mixer sample cup using twenty 26-second cycles. The resulting composition was mixed with 0.5% (w/w), based on the weight of the composition, of Platinum Catalyst. A laminated glass composite was prepared using the silicone composition and then heat tested, both according to the methods of Example 3. After heat treatment, the glass plates in the laminate remained bonded to the reinforced silicone resin film.

### Comparative Example 1

Silicone Base A was mixed with 0.5% (w/w), based on the weight of the Base, of Platinum Catalyst. A laminated glass composite was prepared using the silicone composition and then heat tested, both according to the methods of Example 3. During heat treatment, the glass plates in the laminate separated from the reinforced silicone resin film.

## Claims

1. A filled silicone composition, comprising:
a curable silicone composition comprising at least one silicone resin; and
a low-melting inorganic glass filler having a glass transition temperature not greater than 700 °C and a softening point not greater than 800 °C.

2. The filled silicone composition according to claim 1, wherein the curable silicone composition is a hydrosilylation-curable silicone composition.

3. The filled silicone composition according to claim 1, wherein the filler is selected from an oxide comprising boron, a mixed oxide comprising boron, an oxide comprising phosphorus, and a mixed oxide comprising phosphorus.

4. A silicone adhesive comprising a cured product of at least one silicone resin, and a low-melting inorganic glass filler having a glass transition temperature not greater than 700 °C and a softening point not greater than 800 °C.

5. The silicone adhesive according to claim 4, wherein the filler is selected from an oxide comprising boron, a mixed oxide comprising boron, an oxide comprising phosphorus, and a mixed oxide comprising phosphorus.

6. A coated substrate, comprising:
a substrate; and
a silicone adhesive coating on at least a portion of a surface of the substrate, wherein the adhesive coating comprises a cured product of at least one silicone resin, and a low-melting inorganic glass filler having a glass transition temperature not greater than 700 °C and a softening point not greater than 800°C.

7. The coated substrate according to claim 6, wherein the substrate is glass.

8. The coated substrate according to claim 6, wherein the substrate is a reinforced silicone resin film.

9. The coated substrate according to claim 6, wherein the filler is selected from an oxide comprising boron, a mixed oxide comprising boron, an oxide comprising phosphorus, and a mixed oxide comprising phosphorus.

10. A laminated substrate, comprising:
a first substrate;
at least one additional substrate overlying the first substrate; and
a silicone adhesive coating on at least a portion of at least one surface of each substrate, provided at least a portion of the adhesive coating is between and in direct contact with opposing surfaces of adjacent substrates, wherein the adhesive coating comprises a cured product of at least one silicone resin, and a low-melting inorganic glass filler having a glass transition temperature not greater than 700 °C and a softening point not greater than 800 °C.

11. The laminated substrate according to claim 10, wherein at least one of the substrates is glass.

12. The laminated substrate according to claim 10, wherein at least one of the substrates is a reinforced silicone resin film.

13. The laminated substrate according to claim 10, wherein the filler is selected from an oxide comprising boron, a mixed oxide comprising boron, an oxide comprising phosphorus, and a mixed oxide comprising phosphorus.

## Patentansprüche

1. Gefüllte Silikonzusammensetzung, umfassend:
eine härtbare Silikonzusammensetzung, die mindestens ein Silikonharz umfasst und
ein niedrig schmelzendes anorganisches Glasfüllmittel mit einer Glasübergangstemperatur von nicht höher als 700 °C und einem Erweichungspunkt von nicht höher als 800 °C.

2. Gefüllte Silikonzusammensetzung nach Anspruch 1, wobei die härtbare Silikonzusammensetzung eine mittels Hydrosilylierung härtbare Silikonzusammensetzung ist.

3. Gefüllte Silikonzusammensetzung nach Anspruch 1, wobei das Füllmittel ausgewählt ist aus einem Bor umfassenden Oxid, einem Bor umfassenden Mischoxid, einem Phosphor umfassenden Oxid und einem Phosphor umfassenden Mischoxid.

4. Silikonklebstoff, ein gehärtetes Produkt aus mindestens einem Silikonharz und einem niedrig schmelzenden anorganischen Glasfüllstoff mit einer Glasübergangstemperatur von nicht höher als 700 °C und einem Erweichungspunkt von nicht höher als 800 °C umfassend.

5. Silikonklebstoff nach Anspruch 4, wobei das Füllmittel ausgewählt ist aus einem Bor umfassenden Oxid, einem Bor umfassenden Mischoxid, einem Phosphor umfassenden Oxid und einem Phosphor umfassenden Mischoxid.

6. Beschichtete Substrat, umfassend:
ein Substrat; und
eine Silikonklebstoffbeschichtung auf mindestens einem Teil einer Oberfläche des Substrats, wobei die Klebstoffbeschichtung ein gehärtetes Produkt aus mindestens einem Silikonharz und einem niedrig schmelzenden anorganischen Glasfüllstoff mit einer Glasübergangstemperatur von nicht höher als 700 ° und einem Erweichungspunkt von nicht höher als 800 ° umfasst.

7. Beschichtetes Substrat nach Anspruch 6, wobei das Substrat Glas ist.

8. Beschichtetes Substrat nach Anspruch 6, wobei mindestens eines der Substrate eine verstärkte Silikonharzschicht ist.

9. Beschichtetes Substrat nach Anspruch 6, wobei das Füllmittel ausgewählt ist aus einem Bor umfassenden Oxid, einem Bor umfassenden Mischoxid, einem Phosphor umfassenden Oxid und einem Phosphor umfassenden Mischoxid.

10. Laminiertes Substrat, umfassend:
ein erstes Substrat;
mindestens ein weiteres Substrat, welches das erste Substrat überlagert;
und
einen Silikonklebstoff auf mindestens einem Teil mindestens einer Oberfläche jedes Substrats, vorausgesetzt, dass sich mindestens ein Teil der Klebstoffbeschichtung zwischen und in direktem Kontakt mit gegenüberliegenden Oberflächen benachbarter Substrate befindet, wobei die Klebstoffbeschichtung ein gehärtetes Produkt aus mindestens einem Silikonharz und einem niedrig schmelzenden anorganischen Glasfüllstoff mit einer Glasübergangstemperatur von nicht höher als 700 ° und einem Erweichungspunkt von nicht höher als 800 ° umfasst.

11. Laminiertes Substrat nach Anspruch 10, wobei mindestens eines der Substrate Glas ist.

12. Laminiertes Substrat nach Anspruch 10, wobei mindestens eines der Substrate eine verstärkte Silikonharzfolie ist.

13. Laminiertes Substrat nach Anspruch 10, wobei das Füllmittel ausgewählt ist aus einem Bor umfassenden Oxid, einem Bor umfassenden Mischoxid, einem Phosphor umfassenden Oxid und einem Phosphor umfassenden Mischoxid.

## Revendications

1. Composition de silicone avec charge, comprenant :
une composition de silicone durcissable comprenant au moins une résine de silicone ; et
une charge de verre inorganique à bas point de fusion possédant une température de transition vitreuse ne dépassant pas 700 °C et un point de ramollissement ne dépassant pas 800 °C.

2. Composition de silicone avec charge selon la revendication 1, dans laquelle la composition de silicone durcissable est une composition de silicone durcissable par hydrosilylation.

3. Composition de silicone avec charge selon la revendication 1, dans laquelle la charge est choisie parmi un oxyde comprenant du bore, un oxyde mixte comprenant du bore, un oxyde comprenant du phosphore et un oxyde mixte comprenant du phosphore.

4. Adhésif de silicone comprenant un produit durci d'au moins une résine de silicone, et une charge de verre inorganique à bas point de fusion possédant une température de transition vitreuse ne dépassant pas 700 °C et un point de ramollissement ne dépassant pas 800 °C.

5. Adhésif de silicone selon la revendication 4, dans lequel la charge est choisie parmi un oxyde comprenant du bore, un oxyde mixte comprenant du bore, un oxyde comprenant du phosphore et un oxyde mixte comprenant du phosphore.

6. Substrat enduit, comprenant :
un substrat ; et
un revêtement d'adhésif de silicone sur au moins une partie d'une surface du substrat,
dans lequel le revêtement d'adhésif comprend un produit durci d'au moins une résine de silicone, et une charge de verre inorganique à bas point de fusion possédant une température de transition vitreuse ne dépassant pas 700 °C et un point de ramollissement ne dépassant pas 800 °C.

7. Substrat enduit selon la revendication 6, où le substrat est du verre.

8. Substrat enduit selon la revendication 6, où le substrat est un film de résine de silicone renforcé.

9. Substrat enduit selon la revendication 6, dans lequel la charge est choisie parmi un oxyde comprenant du bore, un oxyde mixte comprenant du bore, un oxyde comprenant du phosphore et un oxyde mixte comprenant du phosphore.

10. Substrat stratifié, comprenant :
un premier substrat ;
au moins un substrat supplémentaire recouvrant le premier substrat ; et
un revêtement d'adhésif de silicone sur au moins une partie d'au moins une surface de chaque substrat, à condition qu'au moins une partie du revêtement d'adhésif se trouve entre, et en contact direct avec, les surfaces opposées de substrats adjacents, dans lequel le revêtement d'adhésif comprend un produit durci d'au moins une résine de silicone, et une charge de verre inorganique à bas point de fusion possédant une température de transition vitreuse ne dépassant pas 700 °C et un point de ramollissement ne dépassant pas 800 °C.

11. Substrat stratifié selon la revendication 10, dans lequel au moins un des substrats est du verre.

12. Substrat stratifié selon la revendication 10, dans lequel au moins un des substrats est un film de résine de silicone renforcé.

13. Substrat stratifié selon la revendication 10, dans lequel la charge est choisie parmi un oxyde comprenant du bore, un oxyde mixte comprenant du bore, un oxyde comprenant du phosphore et un oxyde mixte comprenant du phosphore.
